# EUROPEAN PATENT SPECIFICATION

(11) **EP 4 151 560 B1**
(45) Date of publication and mention of the grant of the patent: **26.11.2025**
(21) Application number: 22195528.9
(22) Date of filing: 14.09.2022
(51) Int. Cl.: B65G 1/04, G06Q 10/087, B65G 1/137

(54) **ARTICLE SEARCH DEVICE AND ARTICLE SEARCH METHOD**
ARTIKELSUCHVORRICHTUNG UND ARTIKELSUCHVERFAHREN
DISPOSITIF DE RECHERCHE D'ARTICLE ET PROCÉDÉ DE RECHERCHE D'ARTICLE

(30) Priority: 17.09.2021 JP 2021151820
(43) Date of publication of application: 22.03.2023
(73) Proprietor: KABUSHIKI KAISHA TOYOTA JIDOSHOKKI, Kariya-shi, Aichi 448-8671 (JP); NATIONAL INSTITUTE OF ADVANCED INDUSTRIAL SCIENCE AND TECHNOLOGY, Chiyoda-ku Tokyo 100-8921 (JP)
(72) Inventor: NODA, Itsuki, Tokyo, 135-0064 (JP); WAKABAYASHI, Akinori, Kariya-shi, 448-8671 (JP); HASHIMOTO, Kenji, Kariya-shi, 448-8671 (JP); YANAGISAWA, Hideo, Kariya-shi, 448-8671 (JP); KOHARA, Ikumitsu, Kariya-shi, 448-8671 (JP); KATO, Norihiko, Kariya-shi, 448-8671 (JP)
(74) Representative: TBK

(56) References cited:
- EP-A1- 3 272 680
- WO-A1-2020/100796
- JP-A- 2019 182 557
- US-A1- 2016 207 710

## Description

### TECHNICAL FIELD

The present disclosure relates to an article search device and an article search method.

### BACKGROUND

Conventionally, for example, a system described in Japanese Unexamined Patent Publication No. 2020-079149 is known as a system for transporting articles. This system carries in articles and stores the articles at a prescribed storage position in a storage unit. This system transports the articles stored in the storage unit from the storage position and retrieves the articles in accordance with retrieval information and the like.
JP 2019 182 557 A discloses an article search device according to the preamble of claim 1 and an article search method according the preamble of claim 7. Further article search devices and article search methods are known from EP 3 272 680 A1 and US 2016/207710 A1.

### SUMMARY

Here, a large number of articles are stored in a storage unit. Thus, when a system identifies a desired article from the storage unit and transports the article from the storage unit for retrieval, it is necessary to perform a search associated with an efficient retrieval operation from a large number of candidates for the retrieval operation. However, this search associated with the retrieval operation has a problem that the load of calculation becomes enormous.

Therefore, an objective of the present disclosure is to provide an article search device and an article search method capable of reducing the load of calculation and retrieving articles.

According to an aspect of the present disclosure, there is provided an article search device, which performs a search associated with an article retrieval operation and includes a storage unit configured to store articles at a storage position, a transport machine configured to transport the articles from the storage unit for retrieval to a retrieval lane, and a control unit configured to control the storage unit and the transport machine, wherein the control unit includes a retrieval target article identification unit configured to identify a retrieval target article from among the articles stored in the storage unit on the basis of retrieval information indicating a retrieval completion state, the retrieval completion state being a state in which the retrieval target article is retrieved to the retrieval lane; a reverse sequential operation calculation unit configured to calculate a reverse sequential operation when it is assumed that the retrieval target article is moved to the storage position in the storage unit in a reverse sequence from the retrieval completion state; and a retrieval operation calculation unit configured to calculate a retrieval operation in which the retrieval target article is moved from the storage position in the storage unit and is in the retrieval completion state by reproducing the reverse sequential operation in reverse.

In the article search device, the retrieval target identification unit identifies the retrieval target article from among the articles stored in the storage unit on the basis of the retrieval information indicating the retrieval completion state. Thus, the retrieval target article identification unit can identify an appropriate article from among a large number of articles stored in the storage unit on the basis of the retrieval information indicating the retrieval completion state. Also, the reverse sequential operation calculation unit calculates the reverse sequential operation when it is assumed that the retrieval target article is moved to the storage position in the storage unit in a reverse sequence from the retrieval completion state. The retrieval completion state is a state in which the articles are arranged rather than a state in which the articles are stored in the storage unit. Accordingly, when the reverse sequential operation calculation unit calculates the reverse sequential operation starting from the retrieval completion state, the calculation can be performed in a state in which the load is limited as compared with the retrieval operation for setting the retrieval completion state from the storage unit. On the other hand, the retrieval operation calculation unit can calculate the retrieval operation in which the retrieval target article is moved from the storage position in the storage unit and is in the retrieval completion state by reproducing the reverse sequential operation in reverse. That is, the retrieval operation calculation unit can calculate the retrieval operation in a simple process of simply reproducing the reverse sequential operation in reverse. Accordingly, the article search device can perform a search associated with the article retrieval operation in a state in which the load of calculation is reduced. Also, it can be assumed that the reverse sequential operation calculation unit allows the operation to be started from an ideal state desired for retrieval. Accordingly, the article search device can perform a search associated with the operation after confirming that a retrieval sequence has been optimized. From the above, it is possible to reduce the load of calculation and retrieve the articles.

The retrieval target article identification unit may assign a number to the retrieval target article stored in the storage unit in correspondence with a retrieval sequence of a plurality of articles in the retrieval completion state. In this case, the retrieval target article identification unit can clarify a corresponding relationship between the retrieval target article within the storage unit and the article of the retrieval completion state. Accordingly, the reverse sequential operation calculation unit can easily calculate the reverse sequential operation on the basis of the corresponding relationship.

The storage unit may include a storage shelf arranged at the storage position of the articles; a transport shelf arranged in alignment with the storage shelf and configured to transport the articles to the transport machine; and a transfer unit arranged in parallel with the storage shelf and configured to move the articles to the storage position and transfer the articles between the storage position and the transport shelf. The reverse sequential operation calculation unit may be set such that the transfer unit is operated to perform a transfer to the storage shelf in a sequence in which a number of the retrieval target article of the transport shelf and a number of the storage position of the storage shelf are aligned. In this case, because the reverse sequential operation calculation unit can provide the operation principle of the retrieval target article within the storage unit, the load of calculation can be reduced by following the operation principle.

The retrieval target article identification unit may set a higher priority level of a retrieval sequence for the retrieval target article stored at the storage position at an earlier time. In this case, the article search device can limit interference between retrieval target articles to be retrieved from the storage position and the like and can smoothly retrieve the articles.

The retrieval target article identification unit may set a higher priority level of a retrieval sequence for the retrieval target article stored at a position closer to the transport machine for performing the retrieval among storage positions. In this case, the movement time required for retrieving the retrieval target articles can be shortened and the articles can be retrieved at a higher speed.

The retrieval target article identification unit may identify the retrieval target article using a pattern table in which a sequence pattern when a plurality of articles are transported to the storage unit is prepared in advance. In this case, the retrieval target article identification unit can reduce the load of calculation and the calculation time using the pattern table prepared in advance.

According to an aspect of the present disclosure, there is provided an article search method of performing a search associated with an article retrieval operation in an article search device including a storage unit configured to store articles at a storage position and a transport machine configured to transport the articles from the storage unit for retrieval to a retrieval lane, the article search method including: a retrieval target article identification step of identifying a retrieval target article from among the articles stored in the storage unit on the basis of retrieval information indicating a retrieval completion state, the retrieval completion state being a state in which the retrieval target article is retrieved to the retrieval lane; a reverse sequential operation calculation step of calculating a reverse sequential operation when it is assumed that the retrieval target article is moved to the storage position in the storage unit in a reverse sequence from the retrieval completion state; and a retrieval operation calculation step of calculating a retrieval operation in which the retrieval target article is moved from the storage position in the storage unit and is in the retrieval completion state by reproducing the reverse sequential operation in reverse.

According to the article search method, it is possible to obtain operations and effects similar to those of the above-described article search device.

According to the present disclosure, it is possible to provide an article search device and an article search method capable of reducing the load of calculation and retrieving articles.

### BRIEF DESCRIPTION OF THE DRAWINGS

FIG. 1 is a schematic side view showing an automated warehouse including an article search device according to an embodiment of the present disclosure.
FIG. 2 is a schematic configuration diagram showing a configuration of the article search device according to the embodiment of the present disclosure.
FIG. 3 is a diagram showing a model of the article search device.
FIG. 4 is a diagram showing a model of the article search device.
FIG. 5 is a block configuration diagram of the article search device.
FIG. 6 is a block configuration diagram of a retrieval target article identification unit.
FIGS. 7A, 7B and 7C are schematic diagrams showing an operation principle within a warehouse body.
FIGS. 8A, 8B, and 8C are conceptual diagrams showing processing content when a pattern table is used by the retrieval target article identification unit.
FIG. 9 is a conceptual diagram for describing the pattern table.
FIG. 10 is a diagram showing an example of the pattern table.
FIG. 11 is a conceptual diagram for describing grouping.
FIG. 12 is a conceptual diagram for describing grouping.
FIG. 13 is a conceptual diagram for describing an extension of the pattern table.
FIG. 14 is a conceptual diagram for describing a degree of freedom in deciding on a carry-in sequence after division.
FIG. 15 is a conceptual diagram for describing a concatenation sequence pattern.
FIGS. 16A and 16B are conceptual diagrams showing processing content of the retrieval target article identification unit.
FIG. 17 is a conceptual diagram showing processing content of the retrieval target article identification unit.
FIGS. 18A and 18B are conceptual diagrams showing processing content of the retrieval target article identification unit.
FIG. 19 is a flowchart showing processing content of a control unit.

### DETAILED DESCRIPTION

Hereinafter, embodiments of the present disclosure will be described in detail with reference to the drawings.

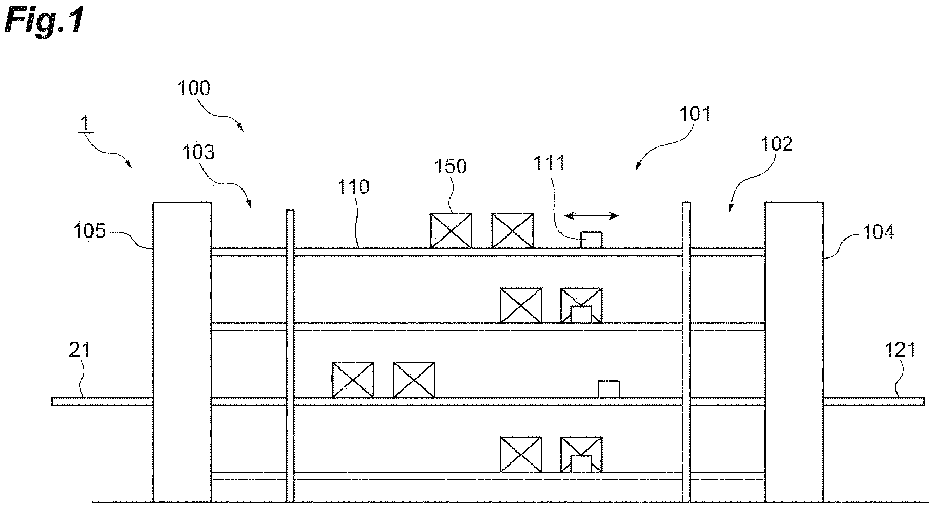

FIG. 1 is a schematic side view showing an automated warehouse 100 including an article search device 1 according to an embodiment of the present disclosure. As shown in FIG. 1, the automated warehouse 100 is a system in which a plurality of articles 150 are stored and an article to be retrieved among the stored articles 150 can be retrieved. The automated warehouse 100 includes a warehouse body unit 101 (a storage unit), a storage transfer passage 102, a retrieval transfer passage 103, a storage elevator 104 (a transport machine), a retrieval elevator 105 (a transport machine), a storage lane 121 (a transport lane), and a retrieval lane 21 (a transport lane). The warehouse body unit 101 has shelves 110 of a plurality of stages. Shelves 110 extend from one end of the warehouse body unit 101 to the other end thereof. The shelves 110 include a storage shelf and a transport shelf as described below and stored articles 150 are stored on the storage shelf such that the articles 150 are packed toward the retrieval side. Also, the shelf 110 transfers the articles 150 to the transport shelf at the time of retrieval and transports the articles 150 to the retrieval side using the transport shelf. The shelf 110 transfers the article 150 from the storage shelf to the transport shelf using the transfer device 111 (a transfer unit). The storage transfer passage 102 is provided at one end of the warehouse body unit 101 and is a mechanism for storing the articles 150 with respect to the shelf 110 of each stage. The retrieval transfer passage 103 is provided at the other end of the warehouse body unit 101 and is a mechanism for retrieving the articles 150 from the shelf 110 of each stage. The storage elevator 104 moves the article 150 stored from the storage lane 121 upward or downward and supplies the article 150 to the storage transfer passage 102 of the stage corresponding to a desired shelf 110. The retrieval elevator 105 receives the article 150 serving as a retrieval target from the shelf 110 and the retrieval transfer passage 103 and moves the article 150 upward or downward to a retrieval port (not shown). The article 150 retrieved from the retrieval elevator 105 is carried out to the retrieval lane 21.

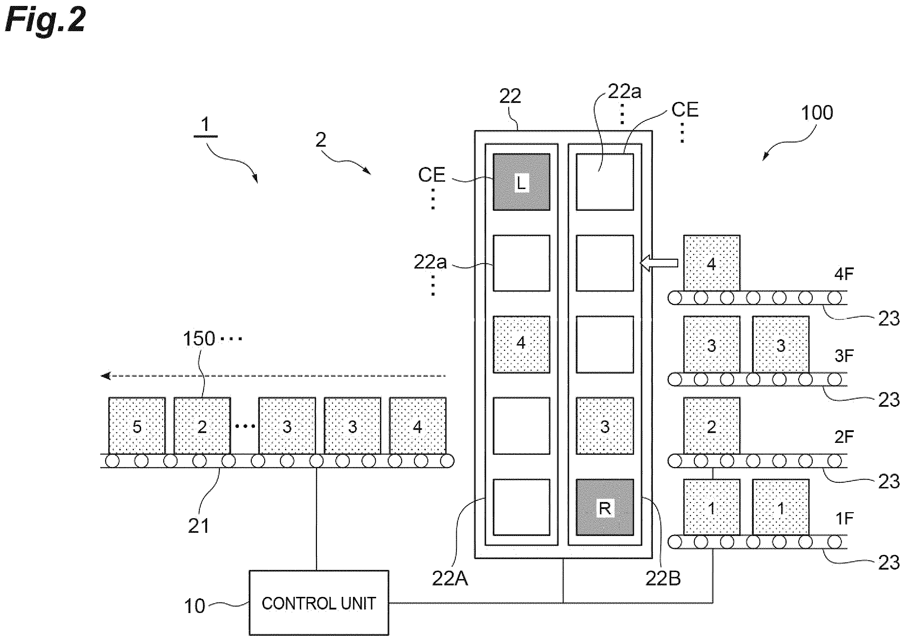

FIG. 2 is a schematic configuration diagram showing a configuration of the article search device 1 according to the embodiment of the present disclosure. FIG. 2 shows a configuration of the retrieval side of the automated warehouse 100. As shown in FIG. 2, the article search device 1 includes a transport system 2 for transporting the articles 150 and a control unit 10 for controlling the transport system 2. The transport system 2 includes a retrieval lane 21, a transport machine 22, and a conveyor 23 of the automated warehouse 100. Among these, the transport machine 22 is a device constituting the above-described retrieval elevator 105. The retrieval lane 21 is a device that receives the article 150 from the transport machine 22 and horizontally transports the article 150. The retrieval lane 21 is provided with respect to a prescribed stage of the transport machine 22. The conveyor 23 is a device that horizontally transports the article 150 from the automated warehouse 100 to the transport machine 22. The conveyor 23 is provided on floors (here, four floors) of the retrieval transfer passage 103.

The transport machine 22 is a device including a horizontal moving means (for example, a conveyor) and a vertical moving means, and configured to move the articles 150 in vertical and horizontal directions. Thereby, the transport machine 22 can receive each article 150 from each floor in the retrieval transfer passage 103 and transport the received article 150 to the retrieval lane 21. In the drawings, a number "n" is attached to the article 150 arranged on an "n^{th} floor" in the storage state in the automated warehouse 100. The same is also true for the following drawings. Also, in the following description, the article 150 stored on the n^{th} floor may be referred to as an "article of the n^{th} floor."

The transport machine 22 is an alternating operation type elevating device and has a transport shelf 22A on the retrieval lane 21 side and a transport shelf 22B on the conveyor 23 side. In the present embodiment, the transport shelves 22A and 22B each have an accommodating area CE for the number of stages for "the number of floors of the automated warehouse + one floor." Also, the transport shelves 22A and 22B each have continuous transport boxes 22a with the number of stages (here, four stages) corresponding to the "number of floors of the automated warehouse." The continuous transport boxes 22a move upward and downward at the same time. When the continuous transport boxes 22a move downward, each transport box 22a is arranged in accommodating areas CE of first to fourth stages in order from the bottom. When the continuous transport boxes 22a move upward, the transport boxes 22a are arranged in accommodating areas CE of second to fifth stages in order from the bottom. In the following description, when the stage number is simply described, the stage number counted from the bottom is indicated unless otherwise specified. Also, the transport box 22a of the transport shelf 22A and the transport box 22a of the transport shelf 22B alternately move upward and downward. That is, the transport box 22a of the transport shelf 22B moves downward when the transport box 22a of the transport shelf 22A moves upward, and the transport box 22a of the transport shelf 22B moves upward when the transport box 22a of the transport shelf 22A moves downward. Also, in the same stage number, the articles 150 can be moved in a horizontal direction between the transport box 22a of the transport shelf 22A and the transport box 22a of the transport shelf 22B and the articles 150 can be delivered and received therebetween. Also, the transport shelves 22A and 22B may each have the accommodating areas CE of the number of stages for "the number of stages of the automated warehouse."

In the present embodiment, the retrieval lane 21 is provided for the accommodating area CE of the second stage from the bottom and four conveyors 23 are provided for the accommodating areas CE of the first to fourth stages from the bottom. Also, in FIG. 2, locations indicated by "L" and "R" in the accommodating area CE are spaces provided for the transport shelves 22A and 22B to move upward and downward. However, a positional relationship associated with the accommodating area CE, the retrieval lane 21, and the conveyor 23 is not particularly limited, and may be appropriately set in accordance with the configuration of the article search device 1.

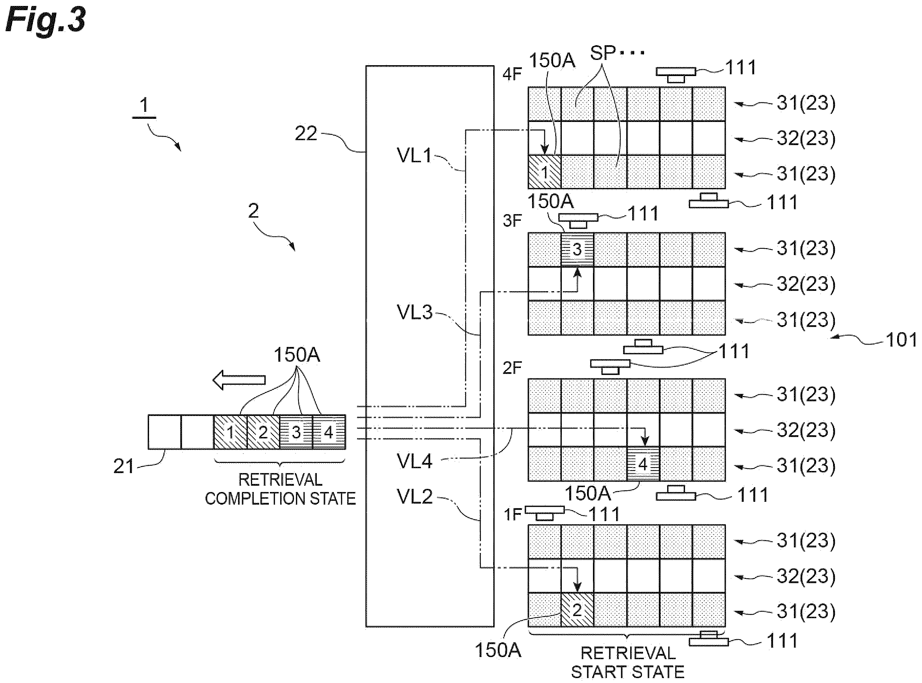

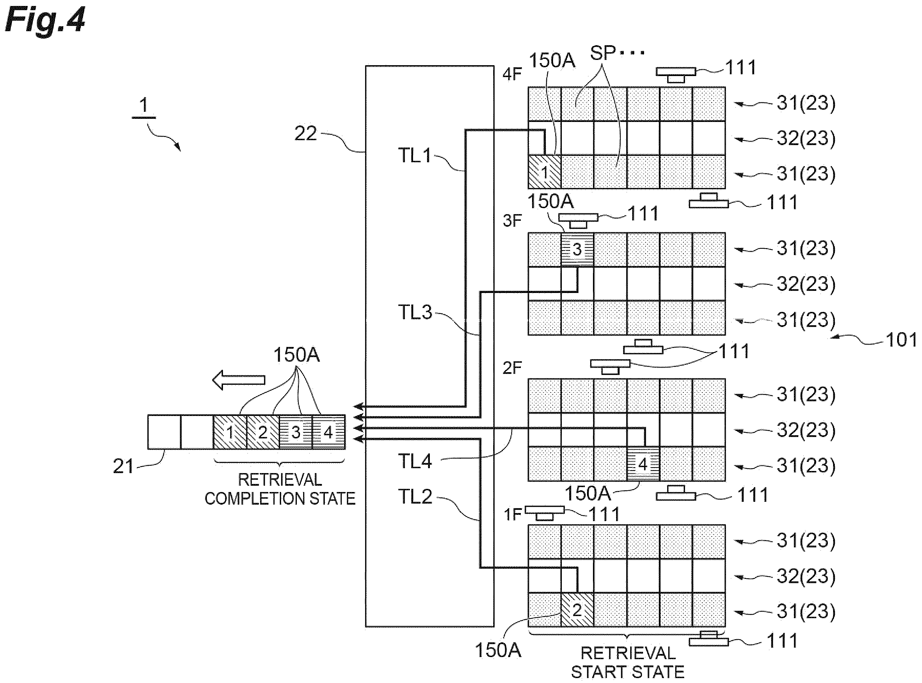

In the following description, the article search device 1 may be modeled and shown as shown in FIGS. 3 and 4. An area where one article 150 can be arranged in the warehouse body unit 101 and the retrieval lane 21 is indicated by one square. Also, articles 150 can operate simultaneously in a horizontal direction as long as there is no interference. The article 150 within the transport machine 22 cannot operate during a vertical operation of the transport shelf of the transport machine 22 as a vertical operation. During a vertical operation of the transport machine 22, the retrieval lane 21 and the conveyor 23 can operate horizontally.

Here, FIGS. 3 and 4 show states of the article search device 1 from the side. However, for the sake of convenience of description, a configuration of each floor of the warehouse body unit 101 is shown as a state seen from above. The warehouse body unit 101 includes a storage shelf 31, a transport shelf 32, and the above-described transfer device 111 on each floor. The storage shelf 31 is a shelf arranged at a storage position SP of the article 150. The storage shelves 31 are provided on both sides of the transport shelf 32 in a width direction. The transport shelf 32 is arranged in alignment with the storage shelf 31 and is a shelf for transporting the article 150 to the transport machine 22. The storage shelf 31 and the transport shelf 32 have the above-described conveyor 23. The article 150 of the storage shelf 31 is transferred to the transport shelf 32 by the transfer device 111. Accordingly, although there is an empty space on the storage shelf 31 after the transfer of the article 150, the other articles 15 (which are not transferred) located on the storage shelf 31 are moved to the retrieval side by the conveyor 23. The transfer device 111 is a device that is arranged in parallel with the storage shelf 31 and moves to each storage position and transfers the article 150 between the storage position SP and the transport shelf 32. More specifically, the transfer device 111 is configured to transfer the article 150 only in a direction from the storage position SP to the transport shelf 32 without moving the article 150 in a direction from the transport shelf 32 to the storage shelf 31. Also, in FIGS. 3 and 4, the storage shelf 31 has a dot pattern such that it is distinguished from the transport shelf 32. Also, in the following description, unless otherwise specified, it is assumed that the article 15 is moved to the retrieval side in the storage shelf 31. However, it is not always indispensably assumed that the article 15 is moved to the retrieval side. When the article 150 is not moved to the retrieval side, a process is performed according to the assumption.

As shown in FIGS. 3 and 4, a retrieval target article 150A serving as a retrieval target among the articles 150 stored at the prescribed storage position SP in the warehouse body unit 101 is transported by the transport shelf 32 and the transport machine 22, such that the retrieval target article 150A is retrieved to the retrieval lane 21. In this way, a state in which the retrieval target article 150A is retrieved to the retrieval lane 21 may be referred to as a "retrieval completion state." Also, a state immediately before the retrieval target article 150A is retrieved from the storage position SP may be referred to as a "retrieval start state."

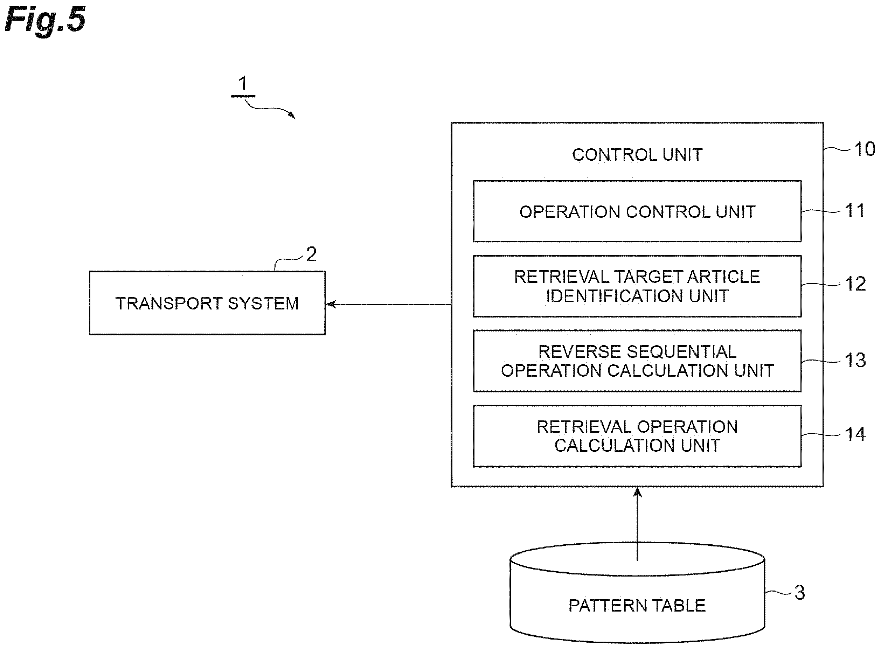

Next, a block configuration of the article search device 1 will be described with reference to FIG. 5. FIG. 5 is a block configuration diagram of the article search device 1 according to the present embodiment. The control unit 10 is a unit for controlling the transport system 2. The control unit 10 performs a control process of receiving the article 150 from each floor of the automated warehouse 100 using the transport machine 22 and carrying the article 150 out to the retrieval lane 21. The control unit 10 includes an electronic control unit (ECU) that generally manages the article search device 1. The ECU is an electronic control unit having a central processing unit (CPU), a read only memory (ROM), a random access memory (RAM), a controller area network (CAN), a communication circuit, and the like. In the ECU, for example, various types of functions are implemented by loading the program stored in the ROM into the RAM and executing the program loaded into the RAM in the CPU. The control unit 10 performs a control process of performing a search associated with an efficient retrieval operation on the article 150 by performing various types of calculation before the retrieval operation is actually performed on the article 150. The control unit 10 controls the transport system 2 on the basis of the retrieval operation associated with the search. The control unit 10 includes an operation control unit 11, a retrieval target article identification unit 12, a reverse sequential operation calculation unit 13, and a retrieval operation calculation unit 14.

The operation control unit 11 is a unit for controlling an operation of the transport system 2 such that each article 150 is transported in accordance with the retrieval operation calculated by the retrieval operation calculation unit 14. The operation control unit 11 allows drive units to operate by transmitting control signals to the drive units of the retrieval lane 21, the transport machine 22, and the conveyor 23 of the transport system 2.

The retrieval target article identification unit 12 is a unit for identifying the retrieval target article 150A from the articles 150 stored in the warehouse body unit 101 on the basis of retrieval information indicating the retrieval completion state. The retrieval information is information for estimating what type of articles 150 are aligned in the retrieval lane 21 in what sequence in the retrieval completion state, such as information such as a retrieval plan. In the retrieval completion state, a number indicating a retrieval sequence is assigned to each article 150. For example, in the examples of FIGS. 3 and 4, the numbers "1 to 4" are assigned in the order of retrieval to the retrieval lane 21. The retrieval target article identification unit 12 assigns numbers to the retrieval target articles 150A stored in the warehouse body unit 101 in correspondence with a retrieval sequence of a plurality of articles 150 in the retrieval completion state. For example, in the examples of FIGS. 3 and 4, the retrieval target article identification unit 12 identifies any of the articles 150 stored in the warehouse body unit 101 as the retrieval target article 150A. At this time, the retrieval target article identification unit 12 assigns the numbers "1 to 4" indicating the retrieval sequence to the retrieval target article 150A. Also, details of a numbering process of the retrieval target article identification unit 12 will be described below.

The reverse sequential operation calculation unit 13 is a unit for calculating a reverse sequential operation when it is assumed that the retrieval target article 150A is moved to the storage position SP in the warehouse body unit 101 in a reverse sequence from the retrieval completion state. The reverse sequential operation calculation unit 13 calculates the reverse sequential operation by searching for a path for transporting the retrieval target article 150A from the retrieval completion state to the retrieval start state. That is, the reverse sequential operation calculation unit 13 searches for a path along which the retrieval target article 150A located on the retrieval lane 21 is moved to the storage position SP where the retrieval target article 150A was originally located in reverse. The reverse sequential operation calculation unit 13 searches for reverse sequential paths of a plurality of patterns and adopts a reverse sequential path along which transportation can be performed efficiently. The reverse sequential operation calculation unit 13 adopts a reverse sequential operation such that a plurality of retrieval target articles 150A can continue to flow without gaps and stops and can reach a target position in the shortest time. Also, the reverse sequential operation calculation unit 13 may search for a reverse sequential path of one pattern without searching for the reverse sequential paths of a plurality of patterns such that it is possible to decide on a reverse sequential operation in which a plurality of retrieval target articles 150A can continue to flow without gaps and stops and can reach a target position in the shortest time.

Specifically, the reverse sequential operation calculation unit 13 searches for a reverse sequential path VL4 for transporting a "fourth" retrieval target article 150A of the retrieval lane 21 to a storage position SP where there is a retrieval target article 150A to which the number "4" associated with the second floor is assigned. The reverse sequential operation calculation unit 13 searches for a reverse sequential path VL3 for transporting a "third" retrieval target article 150A of the retrieval lane 21 to a storage position SP where there is a retrieval target article 150A to which the number "3" associated with the third floor is assigned. The reverse sequential operation calculation unit 13 searches for a reverse sequential path VL2 for transporting a "second" retrieval target article 150A of the retrieval lane 21 to a storage position SP where there is a retrieval target article 150A to which the number "2" associated with the first floor is assigned. The reverse sequential operation calculation unit 13 searches for a reverse sequential path VL1 for transporting a "first" retrieval target article 150A of the retrieval lane 21 to a storage position SP where there is a retrieval target article 150A to which the number "1" associated with the fourth floor is assigned.

The article search device 1 simultaneously performs horizontal movement and vertical movement of each retrieval target article 150A between the retrieval completion state and the retrieval start state and transports each retrieval target article 150A to a destination by combining operations. At this time, the article search device 1 allows the retrieval target articles 150A to be moved such that the retrieval target articles 150A can be sorted quickly without interfering with each other under operation restrictions of the transport machine 22 and the warehouse body unit 101. At this time, the reverse sequential operation calculation unit 13 calculates a type of reverse sequential path through which each retrieval target article 150A reaches a destination storage position SP within the transport machine 22 and the warehouse body unit 101.

The reverse sequential operation calculation unit 13 searches for a reverse sequential path of each retrieval target article 150A by designating at least each part of the transport machine 22 and the warehouse body unit 101 as a search node and using a shortest path search method. For example, the reverse sequential operation calculation unit 13 may use an A-star algorithm (an A* algorithm) as the shortest path search method.

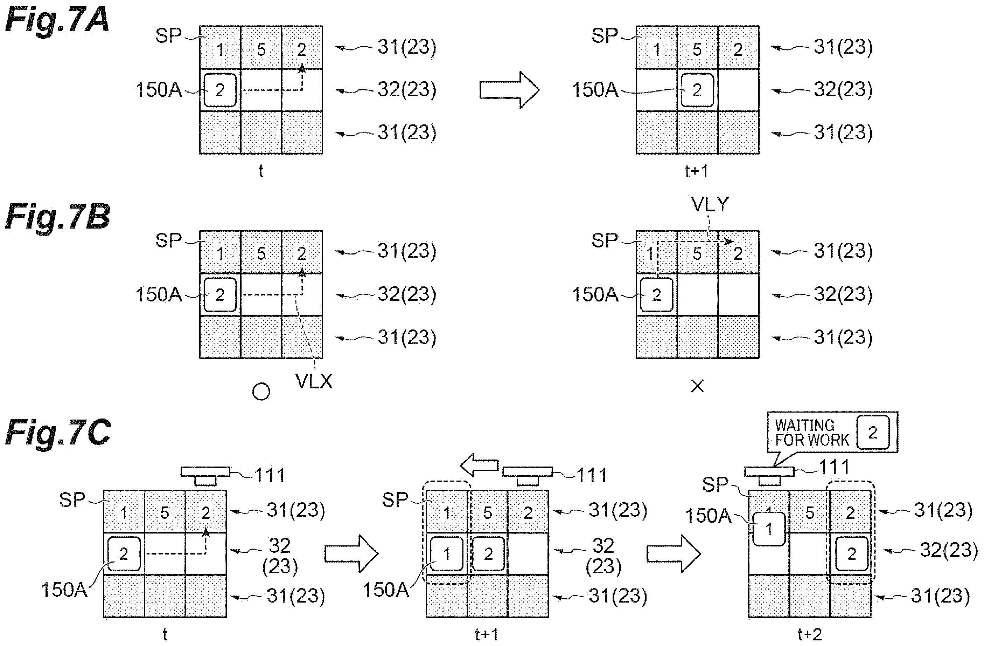

Here, the reverse sequential operation calculation unit 13 may search for the reverse sequential path in accordance with an operation principle in the warehouse body unit 101. For example, as shown in FIG. 7A, the reverse sequential operation calculation unit 13 is set such that the retrieval target articles 150A are moved forward reliably at the next time (t+1) when a front side is empty in a traveling direction at current time (t) on the transport shelf 32. Also, as shown in FIG. 7B, the reverse sequential operation calculation unit 13 is set such that the movement of the retrieval target articles 150A to the storage shelf 31 is performed only when the numbers of the retrieval target articles 150A of the transport shelf 32 are aligned with the numbers of the storage positions of the storage shelf 31. As shown in the drawing on the left side of FIG. 7B, the reverse sequential operation calculation unit 13 can adopt a path VLX for moving the retrieval target article 150A having the number "2" from a place having the number "2" to the storage shelf 31. On the other hand, as shown in the drawing on the right side of FIG. 7B, the reverse sequential operation calculation unit 13 cannot adopt a path VLY for moving the retrieval target article 150A from a place having a number other than "2" to the storage shelf 31. This is because there are retrieval target articles 150A with the numbers "1" and "5." Also, the reverse sequential operation calculation unit 13 searches for a reverse sequential path in the reverse sequence of the actual operation. Accordingly, when the retrieval target article 150A moves from the transport shelf 32 to the storage shelf 31 along the reverse sequential path, the retrieval target article 150A is transferred from the transport shelf 32 to the storage shelf 31 according to an operation of the transfer device 111. Here, in the actual operation (i.e., the operation of reproducing the reverse sequential path in reverse), the transfer device 111 performs an operation of pushing the retrieval target article 150A from the storage shelf 31 to the transport shelf 32. Thus, an operation becomes a virtual operation in which the tip of an extrusion unit of the transfer device 111 is attached to the retrieval target article 150A of the transport shelf 32 and the retrieval target article 150A is drawn to the storage shelf 31 in the calculation of the reverse sequential path performed by the reverse sequential operation calculation unit 13. It is assumed that a situation in which the reverse sequential operation calculation unit 13 operates the transfer device 111 to perform a transfer to the storage shelf 31 is a situation in which such a virtual operation is performed. Also, an operation mode when the transfer device 111 performs a transfer from the storage shelf 31 to the transport shelf 32 is not limited to extrusion. For example, the retrieval target article 150A may be transferred in a state in which it is held in a pinching operation or the like.

The reverse sequential operation calculation unit 13 is set such that the transfer device 111 is operated to perform a transfer to the storage shelf 31 in the order in which the numbers of the retrieval target articles 150A from the transport shelves 32 and the numbers of the storage positions SP of the storage shelves 31 are aligned. Thereby, in the case where the reverse sequential operation is reproduced in reverse to be described below, the retrieval target article 150A is pushed out from the storage shelf 31 by the transfer device 111 and moved to the transport shelf 32. For example, as shown in the drawing of "time t" in FIG. 7C, the retrieval target article 150A having the number "2" is moving toward the storage position SP having the number "2." At this time, at "time t+1," the retrieval target article 150A having the number "1" is aligned with the storage position SP having the number "1." At this time, because the transfer device 111 transfers the retrieval target article 150A having the number "1" to the storage shelf 31 before the retrieval target article 150A having the number "2," the retrieval target article 150A having the number "1" is moved to the storage position SP having the number "1." At "time t+2," the retrieval target article 150A having the number "2" are aligned with the storage position SP having the number "2." At this time, the transfer device 111 adds the retrieval target article 150A having the number "2" to the top of a work waiting list while transferring the retrieval target article 150A having the number "1." At time "t+3" (not shown), the retrieval target article 150A having the number "2" are transferred. Thereby, in the case where the reverse sequential operation is reproduced in reverse to be described below, after the retrieval target article 150A having the number "2" is pushed out by the transfer device 111, the transport shelf 32 moves and the retrieval target article 150A having the number "1" is pushed out from the storage shelf 31.

Here, in relation to the operation of the transfer device 111, it is unclear which retrieval target article 150A first reaches a row corresponding to a target storage position SP and whether the transfer device 111 is called. Also, if the transfer device 111 starts to move after the retrieval target article 150A reaches a target row, the efficiency will decrease. Accordingly, when the transfer device 111 is not working, the reverse sequential operation calculation unit 13 accumulates the indefinite operation time as an indefinite state of the transfer device 111. When the retrieval target article 150A has reached the target row, the reverse sequential operation calculation unit 13 performs calculations under the assumption that the transfer device 111 has been operating in advance by an amount of indefinite operation time.

Returning to FIG. 5, the retrieval operation calculation unit 14 is a unit for calculating a retrieval operation in which the retrieval target article 150A moves from the storage position SP in the warehouse body unit 101 and is in the retrieval completion state by reproducing the reverse sequential operation. The retrieval operation calculation unit 14 reproduces a reverse sequential operation (a reverse sequential path) adopted by the reverse sequential operation calculation unit 13 in reverse. For example, as shown in FIG. 4, the retrieval operation calculation unit 14 acquires retrieval paths TL1 to TL4 by reversing the reverse sequential paths VL1 to VL4 (see FIG. 3) set for the retrieval target articles 150A having the numbers "1 to 4." The retrieval operation calculation unit 14 adopts a retrieval operation based on the retrieval paths TL1 to TL4.

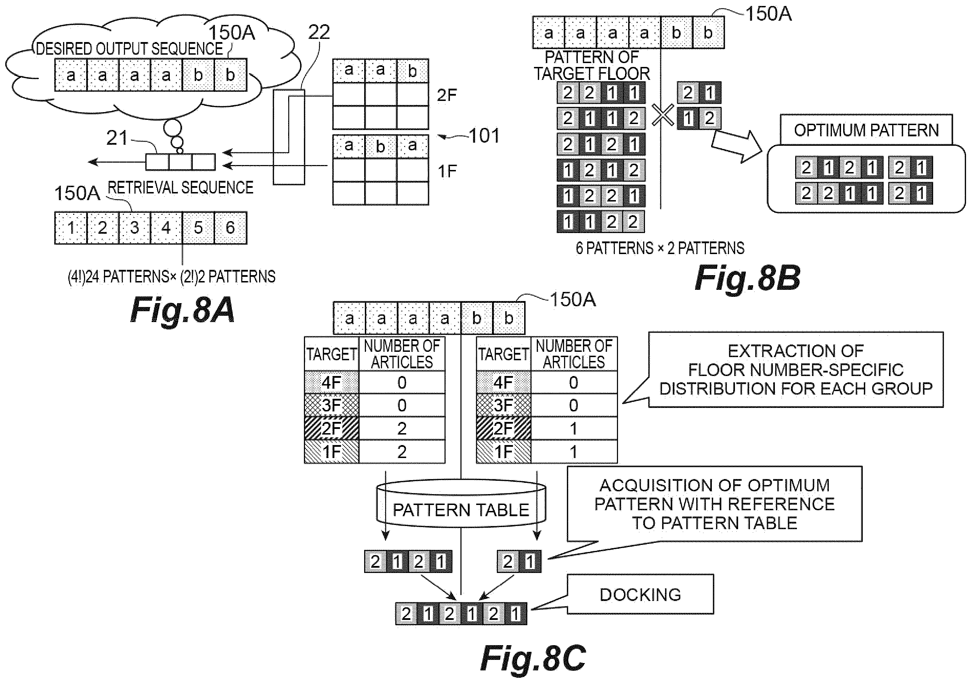

Here, the retrieval target article identification unit 12 identifies the retrieval target article 150A using a pattern table in which a sequence pattern when a plurality of articles 150 are transported to the warehouse body unit 101 is prepared in advance. As shown in FIG. 8A, there are four retrieval target articles 150A of "group a" and two retrieval target articles 150A of "group b" as a sequence in which the retrieval target articles 150A are desired to be output. On the first floor of the warehouse body unit 101, there are two articles 150 of "group a" and one article 150 of "group b." On the second floor of the warehouse body unit 101, there are two articles 150 of "group a" and one article 150 of "group b." When attention is paid to the number of the retrieval sequence, there are 24 patterns of combinations of the retrieval target articles 150A of "group a" and 2 patterns of combinations of retrieval target articles 150A of "group b." There are a total of 48 combination patterns obtained by applying both groups.

On the other hand, as shown in FIG. 8B, a combination pattern is created by paying attention to the target floor for each group. As articles 150 of "group a," two articles 150 on the first floor and two articles 150 on the second floor are present. Thus, there are 6 combination patterns of target floors of the retrieval target articles 150A of "group a." As articles 150 of "group b," one article 150 on the first floor and one article 150 on the second floor are present. Thus, there are two combination patterns of target floors of the retrieval target articles 150A of "group b." There are 12 combination patterns in total by applying both groups. In this way, by paying attention to the target floor and creating combinations, the number of combination patterns can be reduced as compared with FIG. 8A. The retrieval target article identification unit 12 selects an optimum pattern from among these combination patterns. Here, when the path search has been performed for each pattern, an optimum path and transport time until the state reaches a goal state can be decided. This transport time differs according to a pattern and there is a pattern in which the transport time can be minimized among a plurality of patterns. Accordingly, the retrieval target article identification unit 12 selects a pattern in which the transport time can be minimized as the optimum pattern.

Here, the number of patterns becomes enormous as the number of articles 150 increases. When optimum paths are calculated for all these patterns, the processing time becomes enormous. Accordingly, the retrieval target article identification unit 12 decides on an optimum pattern on the basis of the pattern table prepared in advance. For example, as shown in FIG. 8C, if a pattern table is prepared in advance in accordance with a floor number-specific distribution for each group of articles 150, the retrieval target article identification unit 12 can quickly acquire an optimum combination pattern by extracting a floor number-specific distribution for each group of articles 150 and querying the pattern table. The pattern table is stored in the storage unit 3. When the pattern table is used, the pattern table is read from the storage unit 3. Such a pattern table is created by saving data based on a result acquired in advance in the storage unit 3. Accordingly, the pattern table is data prepared in advance.

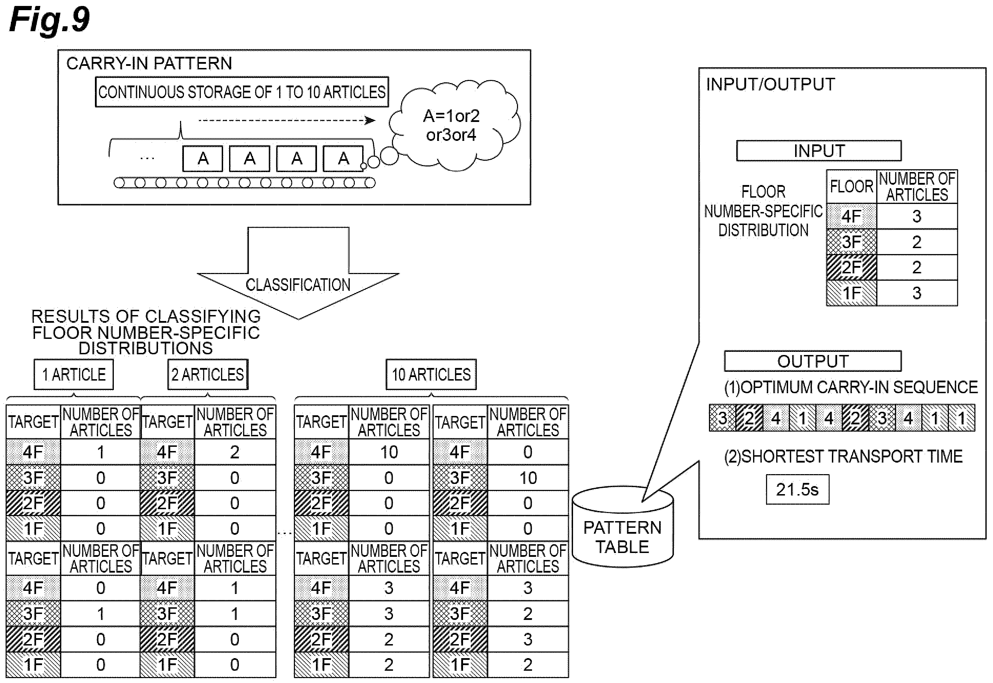

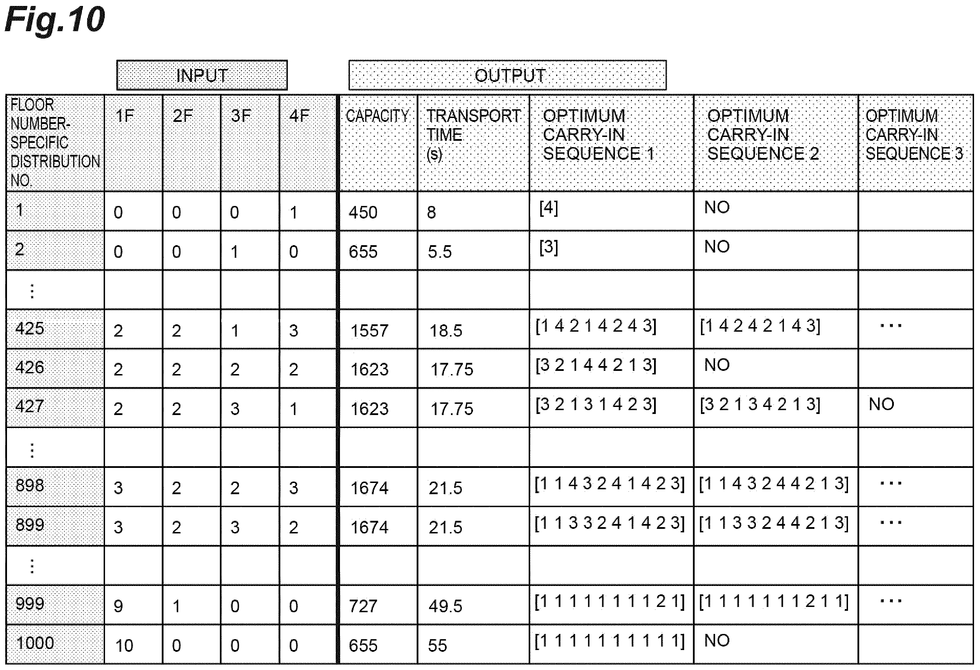

Next, the pattern table will be described with reference to FIGS. 9 and 10. Also, the reason why the retrieval target article identification unit 12 selects the combination pattern is to search for a reverse sequential path that can be processed in a short time when the reverse sequential operation calculation unit 13 calculates a reverse sequential operation. Accordingly, the pattern table is created on the basis of a model when the article 150 is carried into each floor. The pattern table is data in which a plurality of patterns obtained by listing transport destinations of articles are associated with information of carry-in sequences for patterns in relation to a prescribed reference number of articles 150. As a plurality of patterns that are listed, a plurality of patterns in which a total number of transport destinations (floor numbers) are combined are adopted. Here, a reference number is not particularly limited, but is preferably set to a value larger than the number of articles 150 that can be processed by the automated warehouse 100. That is, the maximum number of articles 150 that can be simultaneously transported by the automated warehouse 100 according to the present embodiment is eight. That is, the maximum number of articles 150 can be considered as the number of articles 150 capable of being accepted by the automated warehouse 100. Accordingly, if a number larger than 8 is set as the reference number in the present embodiment, it can be assumed that the decision of an optimum sequence of articles 150 less in number than or equal in number to the reference number is iterated even if a large number of articles 150 are continuously carried into the automated warehouse 100. For example, the reference number may be set to "10."

When "reference number = 10," the number of articles 150 for which the pattern is created is between 1 and 10 as shown in the drawing of the "carry-in pattern" on the upper left of FIG. 9. Also, there are a plurality of combinations in relation to which floor each of a prescribed number of articles 150 is transported to as the target floor. When such combinations of "numbers" and "target floors" are calculated in total, transport sequence combinations of a total of 1398100 patterns can be obtained. When these patterns are classified by floor numbers, a floor number-specific distribution as shown in "results of classifying floor number-specific distributions" at the lower left of FIG. 9 can be obtained. A total of 1000 floor number-specific distributions are classified. Here, the reverse sequential operation calculation unit 13 calculates the optimum path and the transport time until the state reaches the goal state in advance with respect to carry-in sequences of 1398100 patterns in total. Also, the retrieval target article identification unit 12 extracts a carry-in sequence in which the transport time can be minimized from among calculation results of the reverse sequential operation calculation unit 13 in each floor number-specific distribution. Also, a carry-in sequence decision method is not limited to the purpose of minimizing carry-in time, and for example, the carry-in sequence may be extracted such that the retrieval capacity (transport capacity) per unit time is maximized. In this case, a configuration in which an optimum path until the state reaches the goal state and a solution for calculating an index related to the transport capacity in advance and maximizing the index in a linear programming method are obtained is adopted.

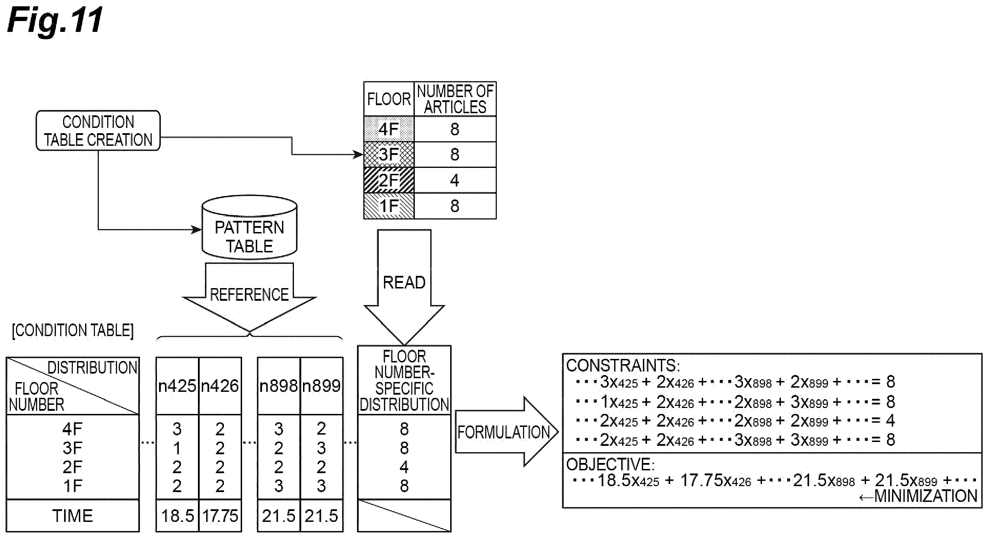

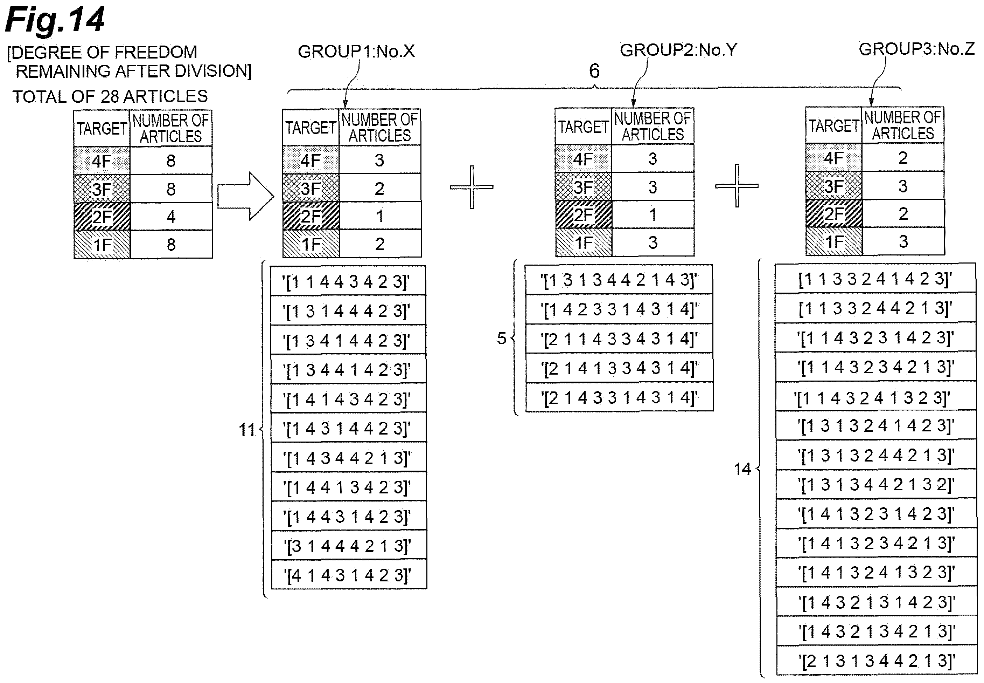

Hence, for example, a pattern table as shown in FIG. 10 can be created. In the pattern table, each floor number-specific distribution serving as input information and output information associated with each floor number-specific distribution is saved. As the output information, information of the capacity, the transport time, and the optimum carry-in sequence is saved. Also, the number of optimum carry-in sequences for a certain floor number-specific distribution is not limited to one. For example, in the floor number-specific distribution of "No. 899," there are two or more optimum transport sequences such that the state reaches the goal state in the shortest transport time of 21.5 seconds. Although only three fields for the optimum transport sequences are shown in FIG. 10, ten or more optimum transport sequences may be saved. For example, in FIG. 14, 11 optimum transport sequences, 5 optimum transport sequences, and 14 optimum transport sequences are listed. From the above, for example, as indicated by "input/output" on the right side of FIG. 9, the retrieval target article identification unit 12 inputs a floor number-specific distribution to a pattern table when an optimum carry-in sequence is decided on with respect to a floor number-specific distribution of "first floor: 3 articles, second floor: 2 articles, third floor: 2 articles, and fourth floor: 3 articles." Therefore, the retrieval target article identification unit 12 acquires the optimum carry-in sequence and the shortest transport time as output information from the pattern table. Thereby, the retrieval target article identification unit 12 decides on the optimum carry-in sequence acquired from the pattern table as the carry-in sequence.

Next, control content when the retrieval target article identification unit 12 decides on a carry-in sequence of the articles 150 greater in number than or equal in number to the reference number will be described. In this case, the retrieval target article identification unit 12 divides articles 150 into a plurality of groups such that the number of articles is less than or equal to the reference number per group. The retrieval target article identification unit 12 decides on the carry-in sequence of the articles 150 of the group on the basis of the pattern table. The retrieval target article identification unit 12 divides the articles 150 into a plurality of groups using the linear programming method. The linear programming method is a mathematical method of obtaining a solution that satisfies the constraints expressed by some linear equations and optimizes (maximizes/minimizes) an objective function expressed by a linear equation. The linear programming method is a method used when the best use of limited resources is desired or when the purpose is desired to be achieved at the lowest cost, i.e., when the optimum resources are allocated. When the floor number-specific distribution of articles to be carried in is given, the retrieval target article identification unit 12 performs grouping such that the total transport time is minimized.

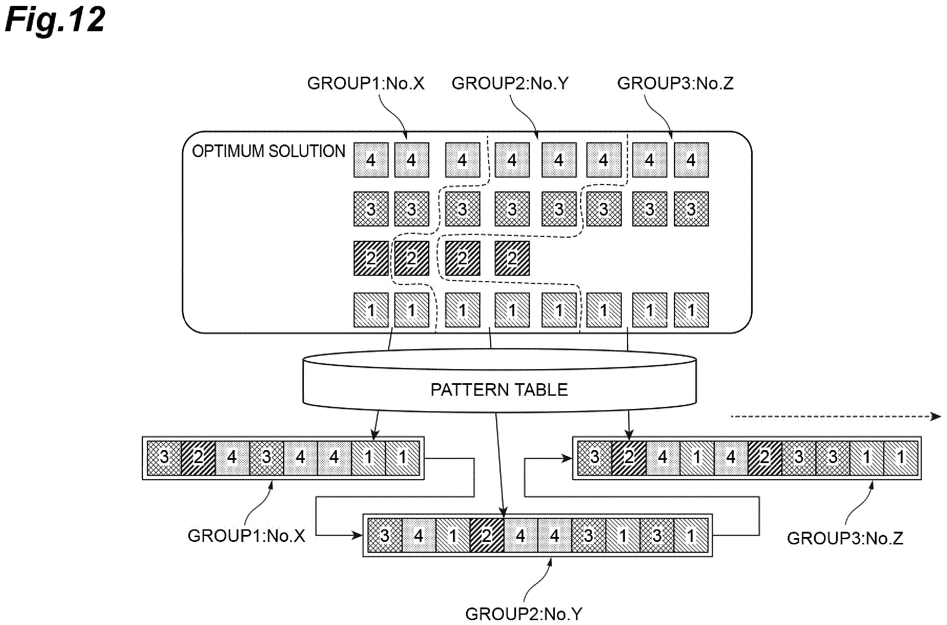

An example of a procedure for dividing into groups will be described with reference to FIGS. 11 and 12. Here, a floor number-specific distribution of "first floor: 8 articles, second floor: 4 articles, third floor: 8 articles, fourth floor: 8 articles" is targeted for division. The total number of articles 150 in the floor number-specific distribution is larger than the reference number of 10. The floor number-specific distribution is not saved in the pattern table. The retrieval target article identification unit 12 creates a condition table on the basis of the pattern table, formulates the condition table for calculation, and performs optimum grouping.

Specifically, as shown in the drawing on the left side of FIG. 11, the retrieval target article identification unit 12 reads a condition table and reads a floor number-specific distribution serving as a current division target with reference to the pattern table. In the condition table, the number of articles 150 on each floor of the floor number-specific distributions (10 or fewer floor number-specific distributions) numbered "from 0 to 1000" in the pattern table and the number of articles 150 associated with each floor number of the floor number-specific distribution serving as the division target are arranged in the same row. Also, the transport times of the floor number-specific distributions (10 or fewer floor number-specific distributions) numbered "from 0 to 1000" of the pattern table are arranged in the same row. The retrieval target article identification unit 12 creates a formula as shown in the drawing of the right side of FIG. 11 by formulating the condition table. In this formula, a distribution of the numbered floor number-specific distributions is set as "xₙ." Also, the number of each floor distribution is input to n here. In a "constraints" field, a first-tier formula is a fourth-floor formula, a second-tier formula is a third-floor formula, a third-tier formula is a second-floor formula, and a fourth-tier formula is a first-floor formula. A formula in an "objective" field is a formula for the transport time. The retrieval target article identification unit 12 performs calculations such that the formula of "objective" is minimized.

The retrieval target article identification unit 12 calculates the formula on the right side of FIG. 11 using prescribed programming. The programming to be adopted is not particularly limited and a known one may be used. For example, as a linear programming solver, "MATLAB (registered trademark) script" or the like may be adopted. Thereby, the retrieval target article identification unit 12 can acquire an optimum solution for grouping. For example, as shown in FIG. 12, "group 1: No. X," "group 2: No. Y," and "group 3: No. Z" are obtained as the optimum solution for grouping "first floor: 8 articles, second floor: 4 articles, third floor: 8 articles, fourth floor: 8 articles." Next, the retrieval target article identification unit 12 reads the optimum carry-in sequences of "No. X," "No. Y," and "No. Z" among the floor number-specific distributions numbered "from 0 to 1000" from the pattern table. The retrieval target article identification unit 12 connects three read optimum carry-in sequences in the order of group 1, group 2, and group 3. As described above, the retrieval target article identification unit 12 decides on the optimum carry-in sequence.

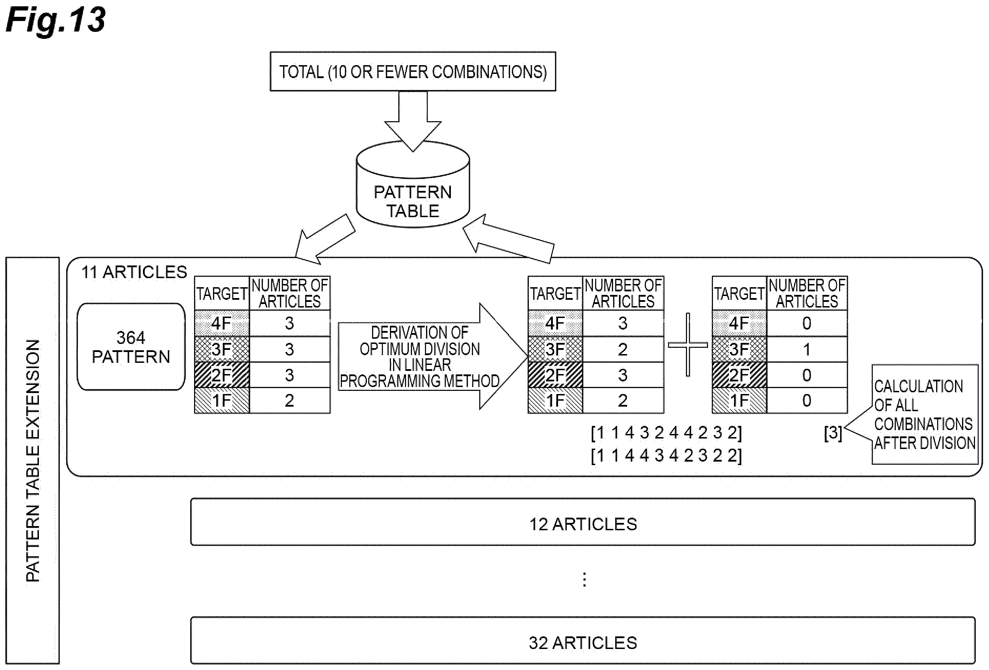

As shown in FIG. 13, the article search device 1 may calculate the optimum carry-in sequence and save the calculated optimum carry-in sequence in the pattern table using grouping as described with reference to FIGS. 11 and 12 in relation to each floor number-specific distribution even if the number of articles is greater than or equal to the reference number. For example, a pattern table may be created for up to 32 floor number-specific distributions. In this case, the retrieval target article identification unit 12 can immediately decide on the optimum carry-in sequence using an extended pattern table if the number of articles 150 is 32 or fewer. Also, when the number of articles 150 having a floor number-specific distribution is increased using the extended pattern table, the number of articles after the extension becomes the reference number. Here, the reference number is 32.

Also, when the optimum carry-in sequence is obtained for the floor number-specific distribution associated with the reference number or more by performing the grouping as described above, a degree of freedom remains even after the grouping. For example, as shown in FIG. 14, after division, group 1 has 11 optimum carry-in sequences, group 2 has 5 optimum carry-in sequences, and group 3 has 14 optimum carry-in sequences. Also, when optimum carry-in sequences are divided into three groups of group 1, group 2, and group 3, there are six combinations as combinations of the sequences. When these combinations are applied, a total of 4620 combinations remain even after grouping. Accordingly, when an extended pattern table is created, the optimum solution is calculated in advance from these combinations and then saved in the pattern table.

Even in a case where an extended pattern table is created, it may be difficult to calculate and save all patterns in advance if the number increases excessively. For example, the retrieval target article identification unit 12 may divide 32 or more articles 150 into 32 or fewer groups using the extended pattern table. At this time, because each division group has a plurality of optimum carry-in sequences, it is necessary to decide which of the optimum carry-in sequences is to be adopted.

On the other hand, when a plurality of carry-in sequences (i.e., a plurality of optimum carry-in sequences) evaluated at the same ratio have been acquired in one group, the retrieval target article identification unit 12 extracts a sequence pattern at the end of the carry-in sequence and creates a concatenation sequence pattern by concatenating the extracted sequence pattern with a sequence pattern of another group. Also, the retrieval target article identification unit 12 decides on a carry-in sequence in one group by comparing the concatenation sequence pattern with data of the pattern table. Also, in the following description, the number of equal ratio-specific solutions is the number of optimum carry-in sequences registered in the data table. A degree of matching between the concatenation sequence pattern and the data in the pattern table is evaluated. An ideal sequence list or the like may be retained and the concatenation sequence pattern may be compared with the ideal sequence list.

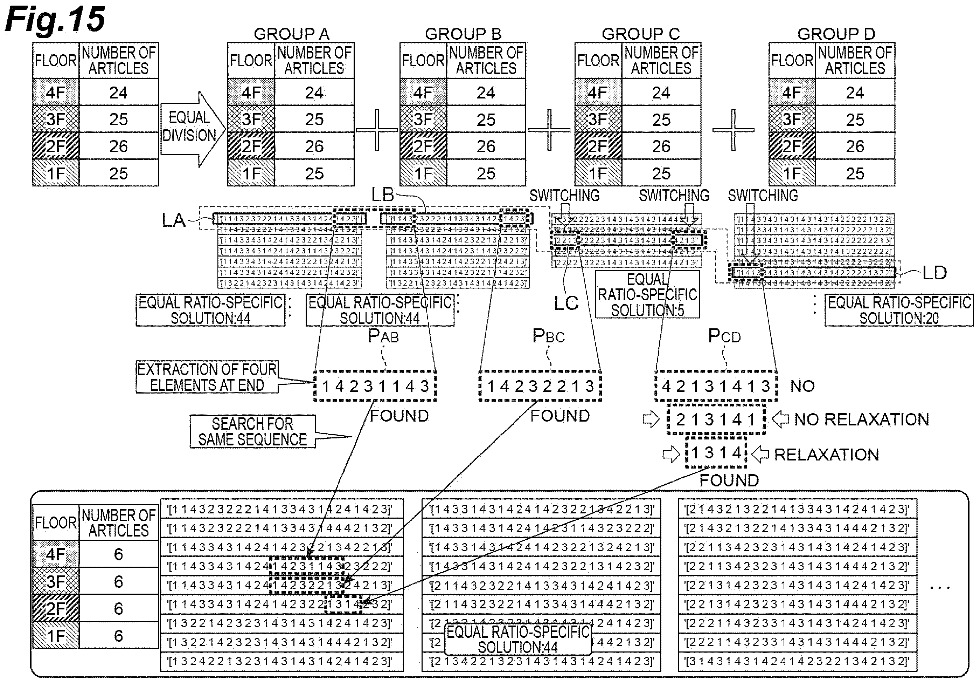

For example, as shown in the drawing of the upper side of FIG. 15, the retrieval target article identification unit 12 divides floor number-specific distributions into group A (44 equal ratio-specific solutions), group B (44 equal ratio-specific solutions), group C (5 equal ratio-specific solutions), and group D (20 equal ratio-specific solutions). Here, it is assumed that the optimum carry-in sequences are concatenated in the order of group A, group B, group C, and group D.

A method in which the retrieval target article identification unit 12 decides on one optimum carry-in sequence from a plurality of optimum carry-in sequences of each group will be described. First, the retrieval target article identification unit 12 selects an optimum carry-in sequence LA in a first row of a first group A and extracts a sequence pattern of four elements at a rear end of the optimum carry-in sequence LA. Subsequently, the retrieval target article identification unit 12 selects an optimum carry-in sequence LB in a first row of a second group B and extracts a sequence pattern of four elements at a front end of the optimum carry-in sequence LB. The retrieval target article identification unit 12 creates a concatenation sequence pattern P_{AB} by concatenating the sequence pattern at the rear end of the optimum carry-in sequence LA and the sequence pattern at the front end of the optimum carry-in sequence LB. The retrieval target article identification unit 12 compares the concatenation sequence pattern P_{AB} with 44 optimum carry-in sequences of group A and searches for the presence of the same sequence pattern. Because the retrieval target article identification unit 12 has found a sequence pattern that is the same as the concatenation sequence pattern P_{AB} within the optimum carry-in sequence, the optimum carry-in sequence LA in the first row is decided on as the carry-in sequence of group A and the optimum carry-in sequence LB in the first row is decided on as the carry-in sequence of group B.

Subsequently, the retrieval target article identification unit 12 extracts a sequence pattern of four elements at the rear end of the decided optimum carry-in sequence LB of the first row with respect to the second group B. The retrieval target article identification unit 12 selects the optimum carry-in sequence LC in the first row of the third group C and extracts a sequence pattern of four elements at the front end of the optimum carry-in sequence LC. The retrieval target article identification unit 12 creates a concatenation sequence pattern P_{BC} having a meaning that is the same as that described above and compares the concatenation sequence pattern P_{BC} with the 44 optimum carry-in sequences of group A. Here, if the concatenation sequence pattern P_{BC} has not been found, the retrieval target article identification unit 12 switches the row of the optimum carry-in sequence LC of group C and searches for a concatenation sequence pattern P_{BC} of the optimum carry-in sequence LB of the first row and the optimum carry-in sequence LC of a second row. If the concatenation sequence pattern P_{BC} has still not been found, the retrieval target article identification unit 12 switches the row of the optimum carry-in sequence LC of group C and searches for a concatenation sequence pattern P_{BC} of the optimum carry-in sequence LB of the first row and the optimum carry-in sequence LC of a third row. In the example of FIG. 15, because the concatenation sequence pattern P_{BC} has been found here, the retrieval target article identification unit 12 decides on the optimum carry-in sequence LC of the third row as the carry-in sequence of group C.

Next, the retrieval target article identification unit 12 extracts a sequence pattern of four elements at the rear end of the decided optimum carry-in sequence LC in the third row with respect to the third group C. The retrieval target article identification unit 12 selects an optimum carry-in sequence LD in the first row of the fourth group D and extracts a sequence pattern of four elements at the front end of the optimum carry-in sequence LD. The retrieval target article identification unit 12 creates a concatenation sequence pattern P_{CD} having a meaning that is the same as that described above and compares the created concatenation sequence pattern P_{CD} with the 44 optimum carry-in sequences of group A. Here, when the retrieval target article identification unit 12 does not find the concatenation sequence pattern P_{CD} even if all optimum carry-in sequences LD of group D are switched, the number of elements of the sequence pattern at the end thereof is reduced by one, the number of elements within the concatenation sequence pattern is changed from eight to six, and a search condition is relaxed. The retrieval target article identification unit 12 performs a search using the relaxed concatenation sequence pattern P_{CD}. When the retrieval target article identification unit 12 does not find the concatenation sequence pattern P_{CD} even if all optimum carry-in sequences LD of group D are switched in a state in which a search condition is relaxed, the number of elements of the sequence pattern at the end thereof is further reduced by one, the number of elements within the concatenation sequence pattern is changed from six to four, and a search condition is further relaxed. The retrieval target article identification unit 12 performs a search using the further relaxed concatenation sequence pattern P_{CD}. In the example of FIG. 15, the retrieval target article identification unit 12 can find the concatenation sequence patterns P_{CD} using the optimum carry-in sequence LD of a sixth row by setting the number of elements of the concatenation sequence patterns P_{CD} to four. Accordingly, the retrieval target article identification unit 12 decides on the optimum carry-in sequence LD of the sixth row as the carry-in sequence of group D.

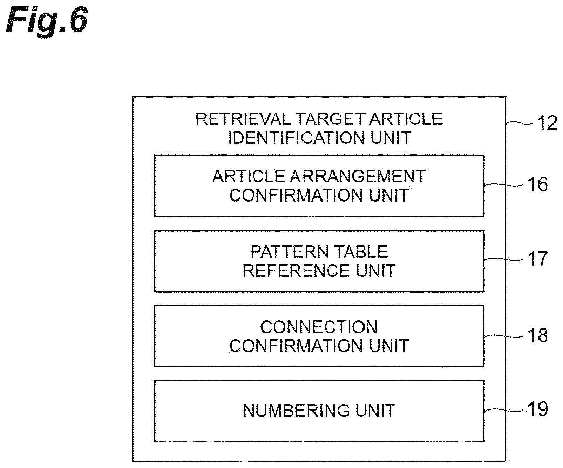

Next, a process in which the retrieval target article identification unit 12 identifies the retrieval target article 150A using the pattern table as described above will be described in more detail with reference to FIG. 6. As shown in FIG. 6, the retrieval target article identification unit 12 includes an article arrangement confirmation unit 16, a pattern table reference unit 17, a connection confirmation unit 18, and a numbering unit 19.

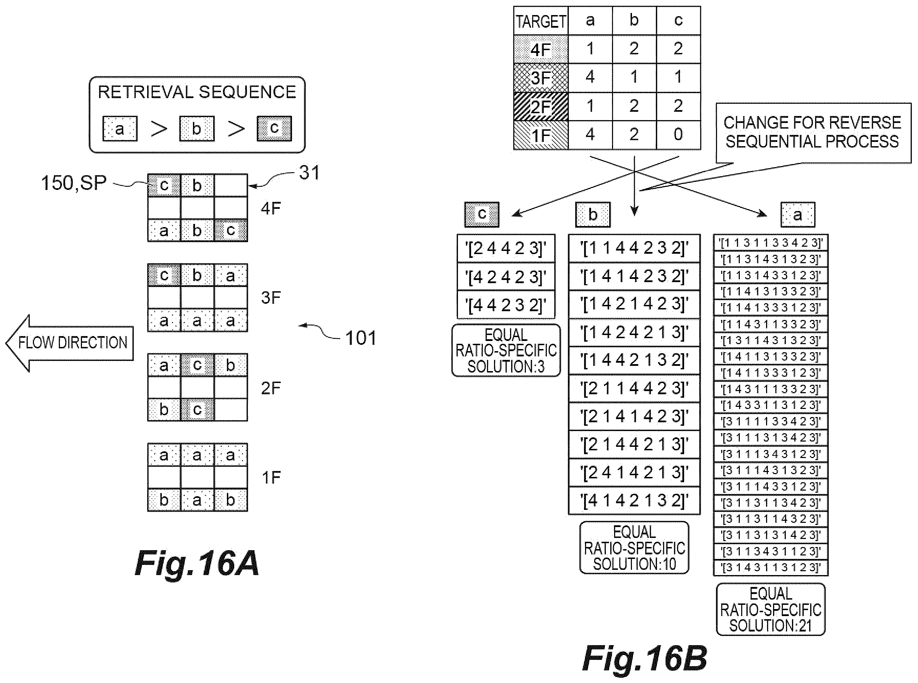

The article arrangement confirmation unit 16 is a unit for confirming the articles 150 arranged on the storage shelf 31 of each floor of the warehouse body unit 101. As shown in FIG. 16A, the article arrangement confirmation unit 16 acquires a retrieval sequence of the article 150 of "group a," the article 150 of "group b," and the article 150 of "group c" from retrieval information. On the other hand, the article arrangement confirmation unit 16 confirms which group of articles 150 is arranged at which storage position SP of the storage shelf 31 of each floor. Also, as shown in FIG. 16B, the article arrangement confirmation unit 16 acquires a floor number-specific distribution of the article 150 of "group a," the article 150 of "group b," and the article 150 of "group c."

The pattern table reference unit 17 refers to the pattern table prepared in advance from the storage unit 3 and acquires an optimum pattern for each floor number-specific distribution of the articles 150 of "group a," the articles 150 of "group b," and the articles 150 of "group c" using the pattern table. Also, the pattern table reference unit 17 acquires the optimum pattern using a method similar to that described with reference to FIGS. 11 to 15. Thereby, the pattern table reference unit 17 has the equal ratio-specific solution of the optimum pattern as shown in FIG. 16B for each of the articles 150 of "group a," the articles 150 of "group b," and the articles 150 of "group c." Here, in a subsequent process of the reverse sequential operation calculation unit 13, the search for the reverse sequential path is performed. Thus, the pattern table reference unit 17 changes the arrangement of equal ratio-specific solutions for each group from the arrangement of "group a," "group b," and "group c" to the arrangement of "group c," "group b," and "group a."

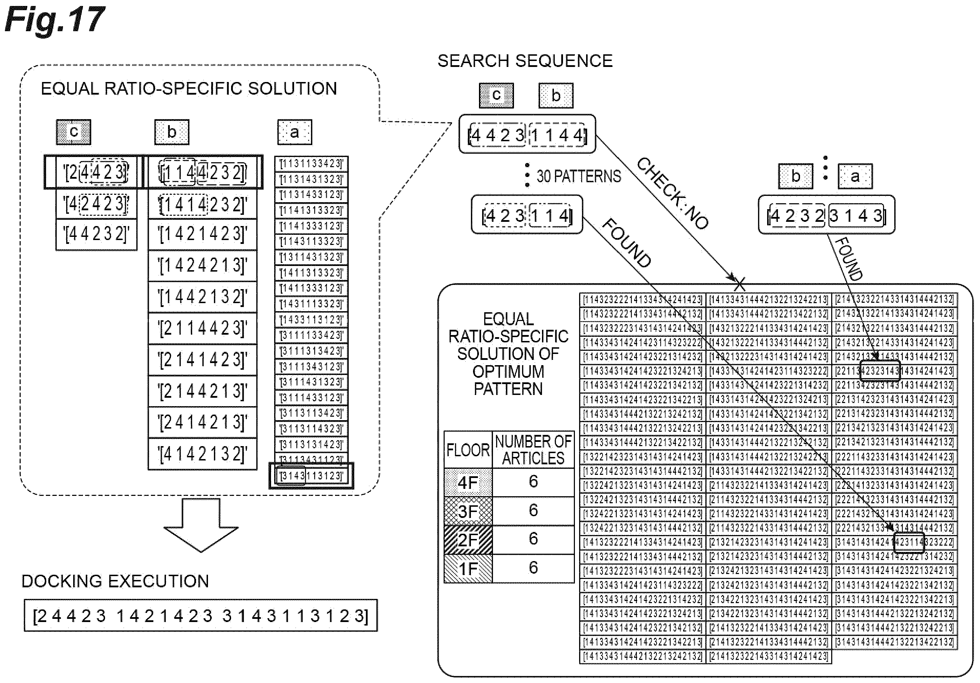

As shown in FIG. 17, the connection confirmation unit 18 decides on an optimum pattern to be adopted from a plurality of equal ratio-specific solutions of each group by confirming a connection between the optimum patterns of the groups. As described with reference to FIG. 15, the retrieval target article identification unit 12 has decided on the optimum carry-in sequence by finding the concatenation sequence pattern with respect to group A, group B, group C, and group D. The connection confirmation unit 18 can find a concatenation sequence pattern with a suitable connection from the equal ratio-specific solutions of "group c," "group b," and "group a" using a method having a meaning that is the same as that of the retrieval target article identification unit 12 and decide on an optimum pattern. By docking the optimum patterns of "group c," "group b," and "group a," the connection confirmation unit 18 can decides on the optimum pattern for all retrieval target articles. Specifically, the connection confirmation unit 18 extracts a sequence pattern of four elements at the rear end of the equal ratio-specific solution in "group c" and a sequence pattern of four elements at the front end of the equal ratio-specific solution in "group b" and creates a concatenation sequence pattern. Subsequently, the connection confirmation unit 18 confirms whether or not the same sequence pattern is present by comparing equal ratio-specific solutions of the floor number-specific distribution of [6, 6, 6, 6] with respect to the concatenation sequence pattern. A subsequent process is similar to the process described with reference to FIG. 15.

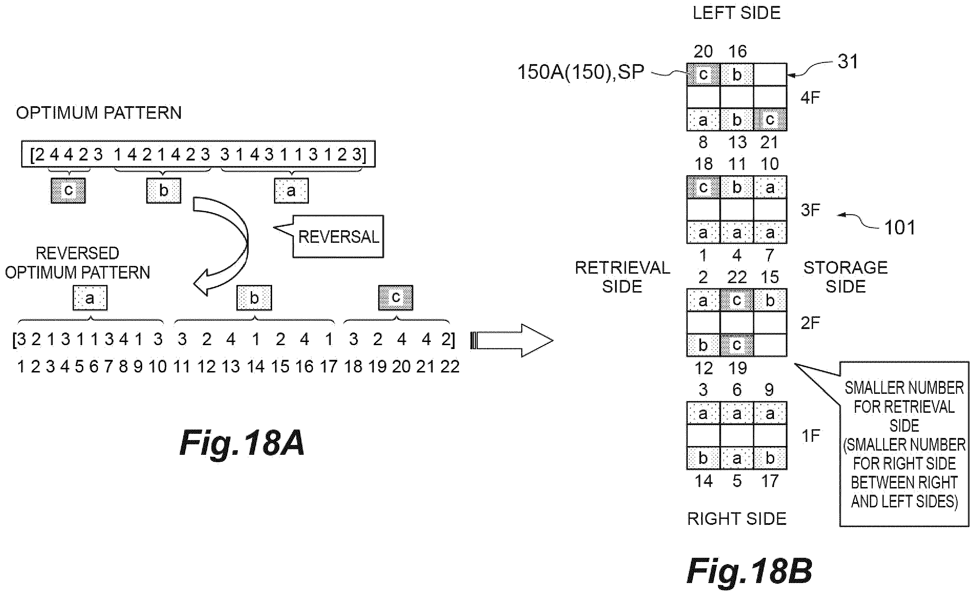

The numbering unit 19 identifies a retrieval target article 150A from the articles 150 within the storage shelf 31 on the basis of the optimum pattern decided on by the connection confirmation unit 18 and assigns a number corresponding to the retrieval sequence. Here, the optimum pattern decided on by the connection confirmation unit 18 is obtained by changing the arrangement from an arrangement of "group c," "group b," and "group a" to an arrangement of "group a," "group b," and "group c" in consideration of the reverse sequential operation. Accordingly, as shown in FIG. 18A, the numbering unit 19 acquires the reversed optimum pattern by reversing the optimum pattern such that the number according to the retrieval sequence is assigned. Because a combination of floors of the reversed optimum pattern is arranged in the retrieval sequence from the left side, it is possible to ascertain a corresponding relationship between the retrieval sequence and the floor number associated with the article 150 such as "an article 150 of the third floor associated with a first element of the retrieval sequence, an article 150 of the second floor associated with a second element of the retrieval sequence, an article 150 of the first floor associated with a third element of the retrieval sequence, an article 150 of the third floor associated with a fourth element of the retrieval sequence, ...."

As shown in FIG. 18B, the numbering unit 19 identifies the retrieval target article 150A from the articles 150 within the storage shelf 31 on each floor on the basis of the corresponding relationship between the reversed optimum pattern and the retrieval sequence and assigns the number of the retrieval sequence. Here, when retrieval target articles 150A of the same group are present in the same floor, the numbering unit 19 assigns a smaller number based on a higher priority level of the retrieval sequence to the retrieval target article 150A stored at the storage position SP at an earlier time. When retrieval target articles 150A of the same group are present in the same row, the numbering unit 19 assigns a smaller number based on a higher priority level of the retrieval sequence to the retrieval target article 150A on the right side.

For example, the numbering unit 19 searches for the article 150 of "group a" from the third floor because a first retrieval target article is an article 150 of "group a" on the third floor. Because the article 150 of "group a" is located on the most retrieval side on the third floor, the numbering unit 19 identifies the article 150 as a first retrieval target article 150A and assigns the number "1" thereto. Because a second retrieval target article is an article 150 of "group a" on the second floor, the numbering unit 19 searches for the article 150 of "group a" from the second floor. Because the article 150 of "group a" is located on the most retrieval side on the second floor, the numbering unit 19 identifies the article 150 as a second retrieval target article 150A and assigns the number "2" thereto. Because a third retrieval target article is an article 150 of "group a" on the first floor, the numbering unit 19 searches for the article 150 of "group a" from the first floor. Because the article 150 of "group a" is located on the most retrieval side on the first floor, the numbering unit 19 identifies the article 150 as a third retrieval target article 150A and assigns the number "3" thereto. The numbering unit 19 assigns numbers in a similar method. Here, when the numbering unit 19 searches for the article 150 of "group a" as a fifth retrieval target article from the first floor, there are articles 150 of "group a" on the left and right storage shelves 31 at a second position from the retrieval side. At this time, the numbering unit 19 identifies the article 150 on the right side as a fifth retrieval target article 150A and assigns the number "5" thereto. Because a sixth retrieval target article is also the article 150 on the first floor, the numbering unit 19 identifies the article 150 on the left side as a sixth retrieval target article 150A. The numbering unit 19 identifies retrieval target articles 150A of "group b" from an eleventh retrieval target article in a similar method, identifies retrieval target articles 150A of "group c" from an eighteenth retrieval target article in a similar method, and assigns numbers thereto.

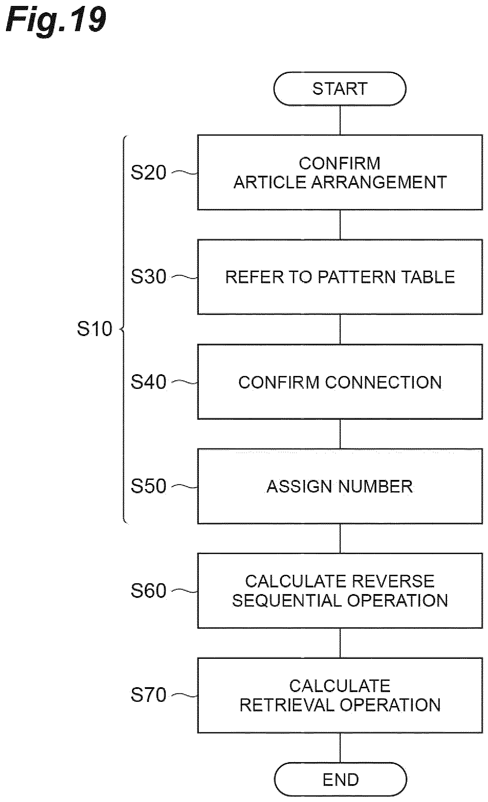

An example of processing content showing the article search method for use in the article search device 1 will be described with reference to FIG. 19. As shown in FIG. 19, the retrieval target article identification unit 12 performs a retrieval target article identification process of identifying a retrieval target article 150A from articles 150 stored in the warehouse body unit 101 on the basis of retrieval information indicating the retrieval completion state (step S10). The retrieval target article identification step S10 includes the processing of steps S20, S30, S40, and S50. Specifically, the article arrangement confirmation unit 16 confirms articles 150 arranged on the storage shelf 31 of each floor of the warehouse body unit 101 (step S20). Subsequently, the pattern table reference unit 17 refers to a pattern table prepared in advance from the storage unit 3 and uses the pattern table to acquire an optimum pattern for each floor number-specific distribution of the articles 150 of each group (step S30). Subsequently, the connection confirmation unit 18 decides on an optimum pattern to be adopted from a plurality of equal ratio-specific solutions of each group by confirming a connection between the optimum patterns of groups (step S40). Subsequently, the numbering unit 19 identifies the retrieval target article 150A from the articles 150 within the storage shelf 31 on the basis of an optimum pattern decided on by the connection confirmation unit 18 and assigns a number corresponding to a retrieval sequence (step S50).

Next, the reverse sequential operation calculation unit 13 calculates a reverse sequential operation when it is assumed that the retrieval target articles 150A are moved to a storage position SP of the warehouse body unit 101 in a reverse sequence from the retrieval completion state (step S60). The retrieval operation calculation unit 14 calculates a retrieval operation in which the retrieval target article 150A moves from the storage position SP of the warehouse body unit 101 and is in the retrieval completion state by reproducing the reverse sequential operation in reverse (step S70). When step S70 ends, the process shown in FIG. 19 ends.

Next, the operations/effects of the article search device 1 and the article search method according to the present embodiment will be described.

In the article search device 1, the retrieval target article identification unit 12 identifies the retrieval target article 150A from the articles 150 stored in the warehouse body unit 101 on the basis of the retrieval information indicating the retrieval completion state. Thus, the retrieval target article identification unit 12 can identify an appropriate article 150 from a large number of articles 150 stored in the warehouse body unit 101 on the basis of the retrieval information indicating the retrieval completion state. Also, the reverse sequential operation calculation unit 13 calculates a reverse sequential operation when it is assumed that the retrieval target articles 150A are moved to a storage position SP in the warehouse body unit 101 in a reverse sequence from the retrieval completion state. The retrieval completion state is a state in which the articles 150 are arranged rather than a state in which the articles 150 are stored in the warehouse body unit 101. Accordingly, the reverse sequential operation calculation unit 13 can perform the calculation in a state in which the load is limited when the reverse sequential operation starting from the retrieval completion state is performed as compared with when the retrieval operation for setting the retrieval completion state from the warehouse body unit 101 is performed. On the other hand, the retrieval operation calculation unit 14 can calculate a retrieval operation in which the retrieval target article 150A moves from the storage position SP in the warehouse body unit 101 and is in the retrieval completion state by reproducing the reverse sequential operation in reverse. That is, the retrieval operation calculation unit 14 can calculate a retrieval operation in a simple process of simply reproducing the reverse sequential operation in reverse. Accordingly, the article search device 1 can perform a search associated with the retrieval operation of the articles 150 in a state in which the load of calculation is reduced. Also, it can be assumed that the reverse sequential operation calculation unit 13 starts the operation from an ideal state in which the articles are desired to be retrieved. Accordingly, the article search device 1 can perform a search associated with an operation after confirming that the retrieval sequence is optimized. From the above, the article 150 can be retrieved in a state in which the load of calculation is reduced.

The retrieval target article identification unit 12 may number the retrieval target articles 150A stored in the warehouse body unit 101 in correspondence with the retrieval sequence of the plurality of articles 150 in the retrieval completion state. In this case, the retrieval target article identification unit 12 can clarify a corresponding relationship between the retrieval target articles 150A within the warehouse body unit 101 and the articles 150 in the retrieval completion state. Accordingly, the reverse sequential operation calculation unit 13 can easily calculate the reverse sequential operation on the basis of the corresponding relationship.

The warehouse body unit 101 includes the storage shelf 31 arranged at the storage position SP of the articles 150; the transport shelf 32 arranged in alignment with the storage shelf 31 and configured to transport the articles 150 to the transport machine 22; and the transfer device 111 arranged in parallel with the storage shelf 31 and configured to move the articles 150 to the storage position SP and transfer the articles 150 between the storage position SP and the transport shelf 32. The reverse sequential operation calculation unit 13 may be set such that the transfer device 111 is operated to perform a transfer to the storage shelf 31 in a sequence in which a number of the retrieval target article 150A of the transport shelf 32 and a number of the storage position SP of the storage shelf 31 are aligned. In this case, because the reverse sequential operation calculation unit 13 can provide the operation principle of the retrieval target article 150A within the warehouse body unit 101, the load of calculation can be reduced by following the operation principle.

The retrieval target article identification unit 12 may set a higher priority level of a retrieval sequence for the retrieval target article 150A stored at the storage position SP at an earlier time. In this case, the article search device 1 can limit interference between retrieval target articles 150A to be retrieved from the storage position SP and the like and smoothly retrieve the articles.

The retrieval target article identification unit 12 may identify the retrieval target article 150A using a pattern table in which a sequence pattern when a plurality of articles 150 are transported to the warehouse body unit 101 is prepared in advance. In this case, the retrieval target article identification unit 12 can reduce the load of calculation and the calculation time using the pattern table prepared in advance. Also, the retrieval capacity can be enhanced using the pattern table.

An article search method according to the present embodiment includes the retrieval target article identification step S10 of identifying a retrieval target article 150A from among the articles 150 stored in the warehouse body unit 101 on the basis of retrieval information indicating a retrieval completion state; the reverse sequential operation calculation step S60 of calculating a reverse sequential operation when it is assumed that the retrieval target article 150A is moved to the storage position SP in the warehouse body unit 101 in a reverse sequence from the retrieval completion state; and the retrieval operation calculation step 70 of calculating a retrieval operation when the retrieval target article 150A is moved from the storage position SP in the warehouse body unit 101 and is in the retrieval completion state by reproducing the reverse sequential operation in reverse.

According to the article search method, operations/effects similar to those of the article search device 1 described above can be obtained.

The present disclosure is not limited to the above-described embodiment.

For example, a system to which the sorting device is applied is not limited to the warehouse system shown in FIG. 1. For example, a plurality of automated warehouses connected in parallel may be provided for a pair of transport lanes 21 and 121. Also, the transport machine may not be of a type having a pair of accommodating shelves that move upward and downward alternately as shown in FIG. 2. For example, a rotary type transport machine (a transport machine in which the accommodating shelves move around in a certain direction step by step and articles can move between the accommodating shelves when the accommodating shelves do not move around) may be adopted. In addition, an escalator type or traction type transport machine may be adopted.

The above-described article search device 1 sets a higher priority level of the retrieval sequence for the retrieval target article 150A stored at the storage position SP at an earlier time, but may set a higher priority level of the retrieval sequence for the retrieval target article 150A stored at a position closer to the transport machine (the retrieval elevator 105) for performing retrieval. Specifically, regardless of whether the retrieval target article 150A is first stored at the storage position SP, the numbering unit 19 is configured to assign a smaller number by setting a higher priority level of the retrieval sequence for a retrieval target article 150A closer to the left side (the retrieval side) at the storage position SP when there are retrieval target articles 150A in the same group on the same floor. Thereby, the movement time required for the retrieval target article 150A to be retrieved can be shortened and the article can be retrieved at a higher speed.

The above-described article search device uses an A-star algorithm or a pattern table to search for a reverse sequential path. However, a method in which the article search device searches for the reverse sequential path is not particularly limited, and for example, the reverse sequential path may be searched for in accordance with a prescribed rule.

The operation principle of articles in the warehouse body is not limited to that shown in FIG. 7. For example, FIG. 7B may be omitted. Also, depending on the configuration of the transfer device, transportation according to different operation principles may be performed. For example, when one transfer device is provided at each of all storage positions SP, a waiting process of FIG. 7C may be omitted because it is not necessary to wait.

Although the linear programming method is used as the calculation method for dividing into groups, the method is not limited. For example, a division rule may be set in advance and a method such as division may be used according to a rule base. In this case, it is preferable to construct suitable rules empirically and/or statistically.

### REFERENCE SIGNS LIST

- 1: Article search device
- 10: Control unit
- 12: Retrieval target article identification unit
- 13: Reverse sequential operation calculation unit
- 14: Retrieval operation calculation unit
- 31: Storage shelf
- 32: Transport shelf
- 101: Warehouse body unit (storage unit)
- 111: Transfer device (transfer unit)
- 150: Article
- 150A: Retrieval target article

The control unit includes a retrieval target article identification unit configured to identify a retrieval target article from among the articles stored in the storage unit on the basis of retrieval information indicating a retrieval completion state, a reverse sequential operation calculation unit configured to calculate a reverse sequential operation when it is assumed that the retrieval target article is moved to the storage position in the storage unit in a reverse sequence from the retrieval completion state, and a retrieval operation calculation unit configured to calculate a retrieval operation in which the retrieval target article is moved from the storage position in the storage unit and is in the retrieval completion state by reproducing the reverse sequential operation in reverse.

## Claims

1. An article search device (1), which performs a search associated with an article retrieval operation and includes a storage unit (101) configured to store articles (150) at a storage position, a transport machine (22) configured to transport the articles (150) from the storage unit (101) for retrieval to a retrieval lane (21), and a control unit (10) configured to control the storage unit (101) and the transport machine (22),
wherein the control unit (10) includes
a retrieval target article identification unit (12) configured to identify a retrieval target article (150A) from among the articles (150) stored in the storage unit (101) on the basis of retrieval information indicating a retrieval completion state, the retrieval completion state being a state in which the retrieval target article (150A) is retrieved to the retrieval lane (21); and
a retrieval operation calculation unit (14) configured to calculate a retrieval operation in which the retrieval target article (150A) is moved from the storage position in the storage unit (101) to reach the retrieval completion state,
the article search device (1) being **characterized by**
a reverse sequential operation calculation unit (13) configured to calculate a reverse sequential operation when it is assumed that the retrieval target article (150A) is moved to the storage position in the storage unit (101) in a reverse sequence from the retrieval completion state, wherein
the retrieval operation calculation unit (14) is configured to calculate the retrieval operation in which the retrieval target article (150A) is moved from the storage position in the storage unit (101) to reach the retrieval completion state by reproducing the reverse sequential operation in reverse.

2. The article search device (1) according to claim 1, wherein the retrieval target article identification unit (12) assigns a number to the retrieval target article (150A) stored in the storage unit (101) in correspondence with a retrieval sequence of a plurality of articles (150) in the retrieval completion state.

3. The article search device (1) according to claim 1 or 2,
wherein the storage unit (101) includes:
a storage shelf (31) arranged at the storage position of the articles (150);
a transport shelf (32) arranged in alignment with the storage shelf (31) and configured to transport the articles (150) to the transport machine (22); and
a transfer unit (111) arranged in parallel with the storage shelf (31) and configured to move the articles (150) to the storage position and transfer the articles (150) between the storage position and the transport shelf (32), and
wherein the reverse sequential operation calculation unit (13) is set such that the transfer unit (111) is operated to perform a transfer to the storage shelf (31) in a sequence in which a number of the retrieval target article (150A) of the transport shelf (32) and a number of the storage position of the storage shelf (31) are aligned.

4. The article search device (1) according to any one of claims 1 to 3, wherein the retrieval target article identification unit (12) sets a higher priority level of a retrieval sequence for the retrieval target article (150A) stored at the storage position at an earlier time.

5. The article search device (1) according to any one of claims 1 to 4, wherein the retrieval target article identification unit (12) sets a higher priority level of a retrieval sequence for the retrieval target article (150A) stored at a position closer to the transport machine (22) for performing the retrieval among storage positions.

6. The article search device (1) according to any one of claims 1 to 5, wherein the retrieval target article identification unit (12) identifies the retrieval target article (150A) using a pattern table in which a sequence pattern when a plurality of articles (150) are transported to the storage unit (101) is prepared in advance.

7. An article search method of performing a search associated with an article retrieval operation in an article search device (1) including a storage unit (101) configured to store articles (150) at a storage position and a transport machine (22) configured to transport the articles (150) from the storage unit (101) for retrieval to a retrieval lane (21), the article search method comprising:
a retrieval target article identification step of identifying a retrieval target article (150A) from among the articles (150) stored in the storage unit (101) on the basis of retrieval information indicating a retrieval completion state, the retrieval completion state being a state in which the retrieval target article (150A) is retrieved to the retrieval lane (21); and
a retrieval operation calculation step of calculating a retrieval operation in which the retrieval target article (150A) is moved from the storage position in the storage unit (101) and is in the retrieval completion state,
the article search method **being characterized by**
a reverse sequential operation calculation step of calculating a reverse sequential operation when it is assumed that the retrieval target article (150A) is moved to the storage position in the storage unit (101) in a reverse sequence from the retrieval completion state, and
the retrieval operation calculation step of calculating the retrieval operation in which the retrieval target article (150A) is moved from the storage position in the storage unit (101) and is in the retrieval completion state by reproducing the reverse sequential operation in reverse.

## Patentansprüche

1. Artikelsuchvorrichtung (1), die eine Suche in Zusammenhang mit einem Artikelentnahmevorgang durchführt und Folgendes umfasst: eine Speichereinheit (101), die eingerichtet ist, um Artikel (150) an einer Speicherposition zu speichern, eine Transportmaschine (22), die eingerichtet ist, um die Artikel (150) von der Speichereinheit (101) zur Entnahme zu einer Entnahmespur (21) zu transportieren, und eine Steuereinheit (10), die zum Steuern der Speichereinheit (101) und der Transportmaschine (22) eingerichtet ist,
wobei die Steuereinheit (10) Folgendes umfasst:
eine Entnahme-Identifizierungseinheit (12), die eingerichtet ist, um einen Entnahmezielartikel (150A) aus den in der Speichereinheit (101) gespeicherten Artikeln (150) auf der Grundlage von Entnahmeinformationen zu identifizieren, die einen Entnahmeabschlusszustand angeben, wobei der Entnahmeabschlusszustand ein Zustand ist, in dem der Entnahmezielartikel (150A) zur Entnahmespur (21) entnommen wird; und
eine Entnahmevorgangs-Berechnungseinheit (14), die eingerichtet ist, um einen Entnahmevorgang zu berechnen, bei dem der Entnahmezielartikel (150A) von der Lagerposition in der Lagereinheit (101) bewegt wird, um den Entnahmeabschlusszustand zu erreichen,
wobei die Artikelsuchvorrichtung (1) **gekennzeichnet ist durch**
eine Rückwärtssequenz-Betriebsberechnungseinheit (13), die eingerichtet ist, um einen Rückwärtssequenzbetrieb zu berechnen, wenn angenommen wird, dass der Entnahmezielartikel (150A) in einer umgekehrten Reihenfolge vom Entnahmeabschlusszustand zur Speicherposition in der Speichereinheit (101) bewegt wird, wobei
die Entnahmevorgangs-Berechnungseinheit (14) eingerichtet ist, um den Entnahmevorgang zu berechnen, bei dem der Entnahmezielartikel (150A) von der Speicherposition in der Speichereinheit (101) bewegt wird, um den Entnahmeabschlusszustand zu erreichen, indem der umgekehrte sequenzielle Vorgang in umgekehrter Reihenfolge wiederholt wird.

2. Artikelsuchvorrichtung (1) gemäß Anspruch 1, wobei die Entnahmezielartikel-Identifizierungseinheit (12) dem in der Speichereinheit (101) gespeicherten Entnahmezielartikel (150A) eine Nummer zuweist, die einer Entnahmereihenfolge einer Vielzahl von Artikeln (150) im Entnahmeabschlusszustand entspricht.

3. Artikelsuchvorrichtung (1) gemäß Anspruch 1 oder 2,
wobei die Speichereinheit (101) Folgendes umfasst:
ein Speicherregal (31), das an der Speicherposition der Artikel (150) angeordnet ist;
ein Transportregal (32), das in Ausrichtung mit dem Lagerregal (31) angeordnet ist und eingerichtet ist, um die Artikel (150) zur Transportmaschine (22) zu transportieren; und
eine Übertragungseinheit (111), die parallel zum Lagerregal (31) angeordnet ist und eingerichtet ist, um die Artikel (150) zur Lagerposition zu bewegen und die Artikel (150) zwischen der Lagerposition und dem Transportregal (32) zu übertragen, und
wobei die Rückwärtssequenz-Betriebsberechnungseinheit (13) so eingestellt ist, dass die Übertragungseinheit (111) so betrieben wird, dass sie eine Übertragung zum Lagerregal (31) in einer Reihenfolge durchführt, in der eine Nummer des Entnahmezielartikels (150A) des Transportregals (32) und eine Nummer der Lagerposition des Lagerregals (31) zueinander ausgerichtet sind.

4. Artikelsuchvorrichtung (1) gemäß einem der Ansprüche 1 bis 3, wobei die Entnahmezielartikel-Identifizierungseinheit (12) eine höhere Prioritätsstufe einer Entnahmesequenz für den Entnahmezielartikel (150A) festlegt, der zu einem früheren Zeitpunkt an der Speicherposition gespeichert wurde.

5. Artikelsuchvorrichtung (1) gemäß einem der Ansprüche 1 bis 4, wobei die Entnahmezielartikel-Identifizierungseinheit (12) eine höhere Prioritätsstufe einer Entnahmesequenz für den Entnahmezielartikel (150A) festlegt, der an einer Position näher an der Transportmaschine (22) zur Durchführung der Entnahme unter den Lagerpositionen gelagert ist.

6. Artikelsuchvorrichtung (1) gemäß einem der Ansprüche 1 bis 5, wobei die Entnahmezielartikel-Identifizierungseinheit (12) den Entnahmezielartikel (150A) unter Verwendung einer Mustertabelle identifiziert, in der ein Sequenzmuster für den Fall, dass eine Vielzahl von Artikeln (150) zur Speichereinheit (101) transportiert werden, im Voraus vorbereitet ist.

7. Artikelsuchverfahren, das eine Suche im Zusammenhang mit einem Artikelentnahmevorgang in einer Artikelsuchvorrichtung (1) durchführt, die eine Speichereinheit (101) zum Speichern von Artikeln (150) an einer Speicherposition und eine Transportmaschine (22) zum Transportieren der Artikel (150) von der Speichereinheit (101) zur Entnahme zu einer Entnahmebahn (21) umfasst, wobei das Artikelsuchverfahren folgende Schritte aufweist:
einen Schritt zum Identifizieren eines Entnahmezielartikels, bei dem ein Entnahmezielartikel (150A) aus den in der Speichereinheit (101) gespeicherten Artikeln (150) auf der Grundlage von Entnahmeinformationen identifiziert wird, die einen Entnahmeabschlusszustand angeben, wobei der Entnahmeabschlusszustand ein Zustand ist, in dem der Entnahmezielartikel (150A) zur Entnahmebahn (21) abgerufen wird; und
einen Entnahmevorgangsberechnungsschritt zum Berechnen eines Entnahmevorgangs, bei dem der Entnahmezielartikel (150A) aus der Speicherposition in der Speichereinheit (101) bewegt wird und sich im Entnahmeabschlusszustand befindet,
wobei das Artikelsuchverfahren durch folgende Schritte gekennzeichnet ist:
einen Berechnungsschritt für einen umgekehrten sequenziellen Vorgang zum Berechnen eines umgekehrten sequenziellen Vorgangs, wenn angenommen wird, dass der Entnahmezielartikel (150A) in einer umgekehrten Reihenfolge vom Entnahmeabschlusszustand zur Speicherposition in der Speichereinheit (101) bewegt wird, und
einen Entnahmevorgangs-Berechnungsschritt zum Berechnen des Entnahmevorgangs, bei dem der Entnahmezielartikel (150A) aus der Speicherposition in der Speichereinheit (101) bewegt wird und sich im Entnahmeabschlusszustand befindet, indem der umgekehrte sequentielle Vorgang in umgekehrter Reihenfolge wiederholt wird.

## Revendications

1. Dispositif de recherche d'articles (1), qui effectue une recherche associée à une opération de récupération d'articles et comprend une unité de stockage (101) configurée pour stocker des articles (150) à une position de stockage, une machine de transport (22) configurée pour transporter les articles (150) depuis l'unité de stockage (101) vers une voie de récupération (21) en vue de leur récupération, et une unité de commande (10) configurée pour commander l'unité de stockage (101) et la machine de transport (22),
dans lequel l'unité de commande (10) comprend
une unité d'identification d'article cible de récupération (12) configurée pour identifier un article cible de récupération (150A) parmi les articles (150) stockés dans l'unité de stockage (101) sur la base d'informations de récupération indiquant un état d'achèvement de la récupération, l'état d'achèvement de la récupération étant un état dans lequel l'article cible de récupération (150A) est récupéré vers la voie de récupération (21) ; et
une unité de calcul d'opération de récupération (14) configurée pour calculer une opération de récupération dans laquelle l'article cible de récupération (150A) est déplacé depuis la position de stockage dans l'unité de stockage (101) pour atteindre l'état d'achèvement de la récupération,
le dispositif de recherche d'articles (1) étant **caractérisé par**
une unité de calcul d'opération séquentielle inverse (13) configurée pour calculer une opération séquentielle inverse lorsqu'il est supposé que l'article cible de récupération (150A) est déplacé vers la position de stockage dans l'unité de stockage (101) dans une séquence inverse à partir de l'état d'achèvement de la récupération, dans lequel
l'unité de calcul d'opération de récupération (14) est configurée pour calculer l'opération de récupération dans laquelle l'article cible de récupération (150A) est déplacé depuis la position de stockage dans l'unité de stockage (101) pour atteindre l'état d'achèvement de la récupération en reproduisant l'opération séquentielle inverse dans le sens inverse.

2. Dispositif de recherche d'articles (1) selon la revendication 1, dans lequel l'unité d'identification d'article cible de récupération (12) attribue un numéro à l'article cible de récupération (150A) stocké dans l'unité de stockage (101) en correspondance avec une séquence de récupération d'une pluralité d'articles (150) dans l'état d'achèvement de la récupération.

3. Dispositif de recherche d'articles (1) selon la revendication 1 ou 2,
dans lequel l'unité de stockage (101) comprend :
une étagère de stockage (31) disposée à la position de stockage des articles (150) ;
une étagère de transport (32) disposée en alignement avec l'étagère de stockage (31) et configurée pour transporter les articles (150) vers la machine de transport (22) ; et
une unité de transfert (111) disposée parallèlement à l'étagère de stockage (31) et configurée pour déplacer les articles (150) vers la position de stockage et transférer les articles (150) entre la position de stockage et l'étagère de transport (32), et
dans lequel l'unité de calcul d'opération séquentielle inverse (13) est réglée de telle sorte que l'unité de transfert (111) est actionnée pour effectuer un transfert vers l'étagère de stockage (31) dans une séquence dans laquelle un numéro de l'article cible de récupération (150A) de l'étagère de transport (32) et un numéro de la position de stockage de l'étagère de stockage (31) sont alignés.

4. Dispositif de recherche d'articles (1) selon l'une quelconque des revendications 1 à 3, dans lequel l'unité d'identification d'article cible de récupération (12) définit un niveau de priorité plus élevé pour une séquence de récupération pour l'article cible de récupération (150A) stocké à la position de stockage à un moment antérieur.

5. Dispositif de recherche d'articles (1) selon l'une quelconque des revendications 1 à 4, dans lequel l'unité d'identification d'article cible de récupération (12) définit un niveau de priorité plus élevé d'une séquence de récupération pour l'article cible de récupération (150A) stocké à une position plus proche de la machine de transport (22) pour effectuer la récupération parmi des positions de stockage.

6. Dispositif de recherche d'articles (1) selon l'une quelconque des revendications 1 à 5, dans lequel l'unité d'identification d'article cible de récupération (12) identifie l'article cible de récupération (150A) en utilisant un tableau de motifs dans lequel un motif de séquence est préparé à l'avance lorsque une pluralité d'articles (150) sont transportés vers l'unité de stockage (101).

7. Procédé de recherche d'articles consistant à effectuer une recherche associée à une opération de récupération d'articles dans un dispositif de recherche d'articles (1) comprenant une unité de stockage (101) configurée pour stocker des articles (150) à une position de stockage et une machine de transport (22) configurée pour transporter les articles (150) depuis l'unité de stockage (101) pour récupération vers une voie de récupération (21), le procédé de recherche d'articles comprenant :
une étape d'identification d'un article cible de récupération consistant à identifier un article cible de récupération (150A) parmi les articles (150) stockés dans l'unité de stockage (101) sur la base d'informations de récupération indiquant un état d'achèvement de la récupération, l'état d'achèvement de la récupération étant un état dans lequel l'article cible de récupération (150A) est récupéré vers la voie de récupération (21) ; et
une étape de calcul d'opération de récupération consistant à calculer une opération de récupération dans laquelle l'article cible de récupération (150A) est déplacé depuis la position de stockage dans l'unité de stockage (101) et se trouve dans l'état d'achèvement de la récupération,
le procédé de recherche d'articles **étant caractérisé par**
une étape de calcul de l'opération séquentielle inverse consistant à calculer une opération séquentielle inverse lorsqu'on suppose que l'article cible de récupération (150A) est déplacé vers la position de stockage dans l'unité de stockage (101) dans une séquence inverse à partir de l'état d'achèvement de la récupération, et
l'étape de calcul de l'opération de récupération consistant à calculer l'opération de récupération dans laquelle l'article cible de récupération (150A) est déplacé depuis la position de stockage dans l'unité de stockage (101) et se trouve dans l'état d'achèvement de la récupération en reproduisant l'opération séquentielle inverse dans le sens inverse.
